# EUROPÄISCHE PATENTSCHRIFT

(11) **EP 3 964 429 B1**
(45) Veröffentlichungstag und Bekanntmachung des Hinweises auf die Patenterteilung: **28.08.2024**
(21) Anmeldenummer: 20194148.1
(22) Anmeldetag: 02.09.2020
(51) Int. Cl.: B62D 33/04

(54) **PLANENAUFBAU UND NUTZFAHRZEUG MIT PLANKENPLANE**
TARPAULIN STRUCTURE AND COMMERCIAL VEHICLE WITH PLANK TARPAULIN
STRUCTURE DE BÂCHE ET VÉHICULE UTILITAIRE POURVU DE BÂCHE À PANNEAUX

(43) Veröffentlichungstag der Anmeldung: 09.03.2022
(73) Patentinhaber: Schmitz Cargobull AG, 48341 Altenberge (DE)
(72) Erfinder: KREFT, Thomas, 48565 Steinfurt (DE); EIKERLING, Frank, 48268 Greven (DE); RICHERT, Dennis, 48282 Emsdetten (DE); LAUS, Markus, 48366 Laer-Holthausen (DE); MUFFERT, Matthias, 48653 Coesfeld (DE); MENSING, Udo, 48612 Horstmar (DE); WERMELT, Franz Josef, 48612 Horstmar (DE)
(74) Vertreter: Cohausz & Florack

(56) Entgegenhaltungen:
- EP-A1- 1 544 087
- EP-A2- 0 267 174
- WO-A1-2010/021584
- WO-A2-2004/002803
- DE-U1- 20 205 984

## Beschreibung

Die Erfindung betrifft einen Planenaufbau eines Nutzfahrzeugs, insbesondere Lastkraftwagen, Anhänger oder Sattelauflieger, mit wenigstens einem sich längs einer Seitenwand erstreckenden Längsholm, einer entlang des Längsholms von einer die zugehörige Seitenwand verschließenden geschlossenen Stellung in eine die zugehörige Seitenwand zum Be- und/oder Entladen freigebende geöffnete Stellung verschiebbar vorgesehenen Seitenplane und mit einer Bodenstruktur zum Aufstellen von mit dem Planenaufbau zu transportierender Ladung, wobei die Seitenplane eine Mehrzahl von sich in der geschlossenen Stellung wenigstens überwiegend vertikal erstreckenden Planken zur Aussteifung der Seitenwand aufweist. Ferner betrifft die Erfindung ein Nutzfahrzeug, insbesondere Lastkraftwagen, Anhänger oder Sattelauflieger, mit einem solchen Planenaufbau.

Nutzfahrzeuge der genannten Art sind vornehmlich zum Transport von Gütern, also der zu transportierenden Ladung, im öffentlichen Straßenverkehr vorgesehen. Dabei können die Nutzfahrzeuge selbst motorisch angetrieben sein, wie beispielsweise im Fall von Lastkraftwagen. Die Nutzfahrzeuge können jedoch auch von einer Zugmaschine gezogen werden, wie dies zum Beispiel bei Anhängern oder Sattelaufliegern der Fall ist.

So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Kofferaufbauten umfassen dabei meist aus Paneelen gebildete Seitenwände und Dächer, wobei diese dann eine Kernlage aus einem geschäumten Kunststoff aufweisen können, um die Seitenwände und das Dach für einen Kühltransport thermisch hinreichend zu isolieren.

Neben den sogenannten Kofferaufbauten sind auch sogenannte Planenaufbauten bekannt, bei denen die Seitenwände und das Dach durch wenigstens eine Plane verschlossen sind. Die Stirnwand ist bei Planenaufbauten wie bei Kofferaufbauten meist als feste Wand ausgebildet, während die Rückwand regelmäßig durch zwei Flügeltüren gebildet wird, um den Laderaum bedarfsweise von hinten zu beladen. Wenn eine Seitenplane entlang einer Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Plane, wobei die Rahmenstruktur durch Rungen getragen wird, die sich an den Ecken des Nutzfahrzeugs befinden oder zwischen den Eckrungen entlang der Seitenwand verteilt vorgesehen sind. Die in den Ecken angeordneten Rungen werden auch als Eckrungen bezeichnet, während die dazwischen angeordneten Rungen auch als Mittelrungen bezeichnet werden.

Planenaufbauten weisen zudem einen Ladeboden auf, auf dem die zu transportierende Ladung im Laderaum des Planenaufbaus abgestellt werden kann. Der Ladeboden ist dabei meist Teil einer Bodenstruktur mit seitlichen Ladebodenprofilen, an dem die Seitenplanen und die Rungen festgelegt werden können. Zudem weisen die Ladebodenprofile eine sogenannte Palettenanschlagleiste auf, die beim Beladen des Planenaufbaus mit Paletten oder dergleichen als Anschlagleiste zum optimalen Ausnutzen der Breite des Laderaums dient. Die Palettenanschlagleiste erstreckt sich daher längs des Ladebodenprofils oder längs der Bodenstruktur. Ein entsprechender Planenaufbau ist beispielsweise aus der EP 1 544 087 A1 bekannt. Zudem sind Rungen zur Bildung eines Planenaufbaus aus der WO 2010/021584 A1 und der EP 0 267 174 A2 bekannt.

Zum Verschließen der Seitenwand eines Planenaufbaus kommt bedarfsweise eine sogenannte Plankenplane zum Einsatz. Dies ist insbesondere dann der Fall, wenn loses Stückgut geladen werden soll. Dann dienen die Planken der Aussteifung der Seitenplane und beugen so einem übermäßigen seitlichen Ausbeulen der Seitenplane vor. Andernfalls kann es nicht nur zu einer Beschädigung der Ladung kommen, sondern auch dazu, dass die genehmigungsrechtlich vorgeschriebene maximale Breite des Planenaufbaus überschritten wird. Dann ist ein Betrieb des Planenaufbaus nicht mehr zulässig. Plankenplanen weisen regelmäßig eine Mehrzahl von Planken auf, die sich bei horizontal abgestelltem Nutzfahrzeug in etwa vertikal erstrecken und längs der Seitenplane verteilt angeordnet sind. Zudem sind die Planken zumeist in sogenannten Planentaschen gehalten. Die Planken sind typischerweise nach unten gegenüber der Bodenstruktur und nach oben gegenüber dem Längsholm beabstandet. Mithin dienen die Planken anders als die Rungen nicht dem Abstützen des Längsholms gegenüber der Bodenstruktur. Die Planken steifen dagegen die Seitenplane bzw. die Seitenwand aus, um ein Ausbeulen der Seitenwand zu vermeiden.

Die Gefahr, dass sich die Seitenplanen trotz der Planken übermäßig nach außen ausbeulen, besteht jedoch insbesondere beim Transport von Reifen oder dergleichen weiter, die meist lose oder in einer sogenannten gebrezelten Verladung transportiert werden. Um beim Reifentransport ein übermäßiges Ausbeulen der Seitenwand zu vermeiden, sind daher weitere Aussteifungen der Seitenplane wie Ketten oder Spanngurte bekannt, die sich längs der Seitenplane erstrecken und die Planken der Seitenplane nach außen abstützen. Alternativ kommen sogenannte Aufsatzlatten zum Einsatz, die in Haltungen der Rungen eingesteckt werden können und sich in diesem Zustand jeweils abschnittsweise längs der Seitenplane erstrecken.

Bei den bekannten Planenaufbauten sind die speziell ausgesteiften Seitenplanen nicht nur konstruktiv aufwändig, sondern auch aufwändig in der Handhabung. Dies gilt insbesondere beim Transport von Gütern, wie beispielsweise auf Paletten bereitgestellter Ladung, die keine spezielle Aussteifung der Seitenplane erfordern.

Daher liegt der vorliegenden Erfindung die Aufgabe zugrunde, den Planenaufbau und das Nutzfahrtzeug jeweils der eingangs genannten Art derart weiterzubilden und auszugestalten, dass der Planenaufbau einfacher und für unterschiedliche Ladungen flexibler zu handhaben ist.

Diese Aufgabe ist bei einem Planenaufbau nach dem Oberbegriff des Anspruchs 1 dadurch gelöst, dass die Seitenplane wenigstens ein mit wenigstens einer Planke verbundenes Querverriegelungsmittel aufweist und dass das wenigstens eine Querverriegelungsmittel in der geschlossenen Stellung der Seitenplane von einer sich formschlüssig an dem Längsholm und/oder der Bodenstruktur in der Richtung seitlich nach außen bezogen auf die Seitenwand abstützenden Verriegelungsstellung in eine sich nicht formschlüssig an dem Längsholm und/oder der Bodenstruktur in der Richtung seitlich nach außen bezogen auf die Seitenwand abstützende Freigabestellung und zurück verstellbar ausgebildet ist.

Die genannte Aufgabe ist ferner gemäß Anspruch 15 gelöst durch ein Nutzfahrzeug, insbesondere Lastkraftwagen, Anhänger oder Sattelauflieger, mit einem Planenaufbau nach einem der Ansprüche 1 bis 14.

Das wenigstens eine verstellbar vorgesehene Querverriegelungsmittel, das mit wenigstens einer Planke verbunden ist, erlaubt in der geschlossenen Stellung der Seitenplane bedarfsweise einen Formschluss mit dem Längsholm und/oder der Bodenstruktur. Dabei ist das Querverriegelungsmittel dann in einer Verriegelungsstellung angeordnet und vorzugsweise direkt und/oder auf eine Weise mit der wenigstens einen Planke verbunden, dass sich die Planke über das Querverriegelungsmittel formschlüssig nach außen an dem Längsholm und/oder der Bodenstruktur abstützen kann. Dieser Formschluss kann für den Fall, dass die Ladung vom Laderaum nach außen gegen die Seitenplane drückt, dazu genutzt werden, die Planke nach außen am Längsholm und/oder der Bodenstruktur abzustützen. Die sich daraus ergebende Aussteifung der mit der wenigstens einen Planke verbundenen Seitenplane kann sicherstellen, dass die Ladung die Seitenplane nicht soweit nach außen drückt, dass die zulässige Breite des Planenaufbaus überschritten wird.

Das wenigstens eine Querverriegelungsmittel ist aber gleichwohl so verstellbar vorgesehen, dass das Querverriegelungsmittel zwischen der Verriegelungsstellung und einer Freigabestellung hin und her verstellt werden kann. In dieser Freigabestellung stützt sich das wenigstens eine Querverriegelungsmittel nicht formschlüssig an dem Längsholm und/oder der Bodenstruktur in der Richtung seitlich nach außen bezogen auf die Seitenwand ab. In der Freigabestellung kann die Seitenwand mithin bedarfsweise einfach geöffnet und wieder geschlossen werden, wozu die Seitenplane mitsamt der wenigstens einen Planke entlang des Längsholms nach vorne und/oder nach hinten verschoben werden kann. Des Weiteren ist es der Einfachheit halber nicht erforderlich, dass das Querverriegelungsmittel bei geschlossener Seitenplane in die Verriegelungsstellung verstellt wird, etwa wenn die im Laderaum des Planenaufbaus angeordnete Ladung nicht nach außen gegen die Seitenplane drückt. Der Planenaufbau kann dann ähnlich eines Planenaufbaus mit einer gewöhnlichen Plankenplane genutzt werden.

Die Richtung seitlich nach außen bezogen auf die Seitenwand, in welcher der Formschluss zwischen dem wenigstens einen Querverriegelungsmittel einerseits und dem Längsholm und/oder der Bodenstruktur andererseits bereitgestellt werden kann, kann auch als seitlich nach außen bezogen auf den Planenaufbau bzw. den Laderaum des Planenaufbaus verstanden werden. Mit anderen Worten kann hier der Laderaum bezogen auf die Seitenplane als innen und die Umgebung des Planenaufbaus als außen verstanden werden. Die entsprechende Richtung des Formschlusses kann dabei insbesondere wenigstens im Wesentlichen senkrecht zur Seitenplane, zur Seitenwand, zum Längsholm und/oder zur Bodenstruktur ausgerichtet sein. Dies ist aber nicht zwingend erforderlich. Jedenfalls ist der entsprechende Formschluss auch dann zweckdienlich, wenn die Richtung des Formschlusses von einer Richtung wenigstens im Wesentlichen senkrecht zur Seitenplane, zur Seitenwand, zum Längsholm und/oder zur Bodenstruktur abweicht. Grundsätzlich wird es aber bevorzugt sein, wenn der entsprechende Formschluss nach außen und wenigstens teilweise quer zum Planenaufbau und/oder zum Laderaum ausgerichtet ist.

Bei einer ersten besonders bevorzugten Ausgestaltung des Planenaufbaus kann das wenigstens eine Querverriegelungsmittel derart mit der wenigstens einen Planke verbunden sein, dass die wenigstens eine Planke bei geschlossener Seitenplane und in der Verriegelungsstellung des Querverriegelungsmittels wenigstens abschnittsweise weiter innen bezogen auf die Seitenwand angeordnet ist als in der Freigabestellung des Querverriegelungsmittels bei geschlossener Seitenplane.

Die wenigstens eine Planke der Seitenplane kann mithin infolge des wenigstens einen Querverriegelungsmittels nicht nur formschlüssig am Längsholm und/oder an der Bodenstruktur festgelegt werden. Das Querverriegelungsmittel ist zudem auch so mit der wenigstens einen Planke der Seitenplane verbunden, dass diese Planke durch das formschlüssige Verriegeln wenigstens abschnittsweise nach innen in Richtung des Laderaums verstellt werden kann, wenn sich einerseits die Seitenplane in der geschlossenen Stellung befindet und andererseits das Querverriegelungsmittel in die Verriegelungsstellung verstellt worden ist. Anders ausgedrückt kommt es zu einer Art wenigstens teilweisen Vorspannung der Planke und damit der Seitenplane nach innen in Richtung des Laderaums. Wird nun eine Ladung wie etwa Reifen lose oder gebrezelt in den Planenaufbau geladen, kann die Ladung die entsprechende Planke und damit die Seitenplane etwas nach außen drücken, wie dies vom Prinzip aus dem Stand der Technik bekannt ist. Infolge des vorherigen wenigstens teilweisen Verstellens der wenigstens einen Planke zusammen mit der mit der Planke verbundenen Seitenplane nach innen ergibt sich bei dem nachträglichen Verschieben nach außen in Bezug auf die Seitenwand des Nutzfahrzeugs durch die von der Ladung auf die Planke ausgeübte Last keine Überschreitung der maximal zulässigen Breite des Planenaufbaus.

Um sicherzustellen, dass die maximal zulässige Breite des Planenaufbaus nicht überschritten wird, bietet es sich grundsätzlich an, wenn das wenigstens eine Querverriegelungsmittel in der geschlossenen Stellung der Seitenplane von einer sich formschlüssig an dem Längsholm und der Bodenstruktur in der Richtung seitlich nach außen bezogen auf die Seitenwand abstützenden Verriegelungsstellung in eine sich nicht formschlüssig an dem Längsholm und der Bodenstruktur in der Richtung seitlich nach außen bezogen auf die Seitenwand abstützende Freigabestellung und zurück verstellbar ausgebildet ist. Die zugehörige wenigstens eine Planke kann dann bei geschlossener Seitenplane und in der Verriegelungsstellung des Querverriegelungsmittels zuverlässiger und/oder bedarfsweise umfangreicher weiter innen bezogen auf die Seitenwand angeordnet werden, als dies in der Freigabestellung des Querverriegelungsmittels bei geschlossener Seitenplane der Fall ist.

Das wenigstens eine Querverriegelungsmittel muss aber weder in der geschlossenen Stellung der Seitenplane noch beim Schließen der Seitenplane zwingend in die Verriegelungsstellung verstellt werden. Das Querverriegelungsmittel kann auch in der Freigabestellung verbleiben, wenn ein Verschieben oder Vorspannen der zugehörigen Planke nach innen in Richtung des Laderaums nicht erforderlich ist. Bedarfsweise können bei geschlossener Seitenplane auch Querverriegelungsmittel bestimmter Planken in der Freigabestellung und Querverriegelungsmittel anderer Planken in der Verriegelungsstellung angeordnet sein, je nachdem wo dies zweckmäßig erscheint und wo nicht. Wenn das eine oder alle Querverriegelungsmittel in der Freigabestellung angeordnet ist/sind, kann der Planenaufbau wie nach Art eines gewöhnlichen Plananaufbaus ohne zusätzliche Aussteifung der Plankenplane betrieben und gehandhabt werden. Dabei sind dann auch keine Einbußen hinsichtlich der möglichen Laderaumbreite durch nach innen verstellte Planken zu befürchten. Es wird mithin bei dem hier beschriebenen Planenaufbau eine hohe Flexibilität für den Einsatz des Planenaufbaus bereitgestellt. Dabei erlaubt die Verstellung des wenigstens einen Querverriegelungsmittels gleichzeitig eine sehr leichte Handhabung der Seitenplane, da das Verstellen des wenigstens einen Querverriegelungsmittels problemlos, insbesondere vom Fahrer des Nutzfahrzeugs, erfolgen kann.

Die Richtung seitlich nach innen bezogen auf die Seitenwand, in welcher die wenigstens eine Planke durch das Verstellen des wenigstens einen Querverriegelungsmittels wenigstens teilweise verstellt werden kann, ist dem Formschluss zwischen dem wenigstens einen Querverriegelungsmittel einerseits und dem Längsholm und/oder der Bodenstruktur andererseits wenigstens teilweise, insbesondere wenigstens im Wesentlichen, entgegengesetzt. Die Richtung nach innen, kann auch als nach innen in Bezug auf den Planenaufbau bzw. den Laderaum des Planenaufbaus verstanden werden, und zwar ausgehend von einer Seitenwand des Planenaufbaus. Mit anderen Worten kann hier der Laderaum bezogen auf die Seitenplane als innen und die Umgebung des Planenaufbaus als außen verstanden werden.

Im vorliegenden Fall werden unter einer Seitenwand insbesondere die Seitenplanen in einer geschlossenen Stellung und/oder die Rungen an der entsprechenden Seite des Plananaufbaus verstanden. Obschon Planenaufbauten keine festen Seitenwände aufweisen, bildet die Seitenplane bedarfsweise zusammen mit den Rungen die Seitenwand des Planenaufbaus. Alternativ kann die Seitenwand aber auch durch die Rungen entlang der entsprechenden Seiten gebildet werden, da diese fest und ortsfest vorgesehen sind, auch wenn die Rungen die entsprechende Seite des Planenaufbaus nicht verschließen. Wird hier die Seitenwand wenigstens im Wesentlichen durch die Seitenplane in der geschlossenen Stellung definiert, dann sind bevorzugt das eine Querverrieglungsmittel bzw. alle Querverriegelungsmittel bei geschlossener Seitenplane in der Freigabestellung angeordnet. Dann bildet die Seitenplane und damit die Seitenwand eine definierte äußere Stellung und nicht etwa eine wenigstens teilweise nach innen vorgespannte Stellung aus.

Des Weiteren kann das wenigstens eine Querverriegelungsmittel bedarfsweise derart mit der wenigstens einen Planke verbunden sein, dass die wenigstens eine Planke in der Verriegelungsstellung des Querverriegelungsmittels insgesamt weiter innen bezogen auf die Seitenwand angeordnet ist als in der Freigabestellung des Querverriegelungsmittels. Dies bietet sich insbesondere an, wenn die Ladung die Planke über wenigstens im Wesentlichen die gesamte Länge der entsprechenden Planke nach außen drücken kann. Ist dagegen nur zu befürchten, dass die Planke im oberen Bereich oder im unteren Bereich von der Ladung nach außen gedrückt wird, so kann es dagegen ausreichen, wenn die Planke nur abschnittsweise weiter innen bezogen auf die Seitenwand angeordnet ist als in der Freigabestellung. Dabei bietet es sich ganz grundsätzlich an, wenn die wenigstens eine Planke in der Freigabestellung mit ihrem unteren Ende oberhalb der Bodenstruktur und mit ihrem oberen Ende unterhalb des Längsholms endet. Dann kann die Seitenplane in der Freigabestellung des wenigstens einen Querverriegelungsmittels analog zu gewöhnlichen Plankenplanen gehandhabt werden.

Um ein hinreichendes Verstellen der wenigstens einen Planke nach außen zu ermöglichen, wenn die Ladung von innen gegen die Seitenplane drückt, ohne die Breite des Laderaums übermäßig einzuschränken, bietet es sich an, wenn die wenigstens eine Planke in der Verriegelungsstellung des wenigstens einen Querverriegelungsmittels bei geschlossener Seitenplane wenigstens abschnittsweise um wenigstens 10 mm, vorzugsweise um wenigstens 20 mm, insbesondere um wenigstens 30 mm, weiter innen bezogen auf die Seitenwand als in der Freigabestellung des wenigstens einen Querverriegelungsmittels bei geschlossener Seitenplane angeordnet ist. Je größer dieser Abstand ist, umso stärker kann die Ladung von innen gegen die Seitenplane drücken, ohne dass dadurch die maximale Breite des Planenaufbaus überschritten wird. Aus den bereits zuvor genannten Gründen kann es sich in diesem Zusammenhang weiter anbieten, wenn die wenigstens eine Planke in der Verriegelungsstellung des zugehörigen Querverriegelungsmittels insgesamt um den genannten Abstand weiter innen angeordnet ist, als wenn das zugehörige Querverriegelungsmittel in der Freigabestellung angeordnet ist. Zudem kann bereits ein solch geringer Abstand ausreichen, da sich das wenigstens eine Querverriegelungsmittel formschlüssig von innen an dem Längsholm und/oder an der Bodenstruktur abstützt. Dies gilt insbesondere für den Fall, dass sich das wenigstens eine Querverriegelungsmittel an dem Längsholm und an der Bodenstruktur formschlüssig abstützt, um hohe Kräfte an den Planenaufbau ableiten zu können.

Unabhängig davon, ob die Planke über das in der Verriegelungsstellung befindliche Querverriegelungsmittel nach innen in Bezug auf die Seitenwand verstellt wird, ist es aus konstruktiver Sicht zweckmäßig, wenn sich das wenigstens eine Querverriegelungsmittel in der Verriegelungsstellung formschlüssig an einer an den Laderaum grenzenden Innenseite des Längsholms abstützt. Dann bedarf es beispielsweise keiner gesonderten Anpassung des Längsholms und der Längsholm kann die von dem wenigstens einen Querverriegelungsmittel eingeleiteten Kräfte zuverlässig ableiten. Alternativ oder zusätzlich kann sich das wenigstens eine Querverriegelungsmittel in der Verriegelungsstellung formschlüssig an einer Palettenanschlagleiste der Bodenstruktur abstützen. Die Palettenanschlagleiste wird bedarfsweise ohnehin vorgesehen sein, so dass die Bodenstruktur zur Abstützung des wenigstens einen Querverriegelungsmittels nicht angepasst werden muss. Die Palettenanschlagleiste ist zum Anschlag der Paletten regelmäßig auch stabil genug ausgebildet, um die von dem wenigstens einen Querverriegelungsmittel eingeleiteten Kräfte zuverlässig abzuleiten.

Zur weiteren Aussteifung des Planenaufbaus und bedarfsweise zur weiteren Abstützung der Seitenplane kann an der wenigstens einen Seitenwand eine Mehrzahl von Rungen vorgesehen sein, bei denen es sich um Eckrungen und/oder um Mittelrungen handeln kann. Die Rungen stützen dabei wenigstens teilweise das Dach oder den Längsholm gegenüber der Bodenstruktur oder des Chassis des Planenaufbaus ab. In diesem Fall bietet es sich an, wenn in der geschlossenen Stellung der Seitenplane jeweils zwischen zwei Rungen wenigstens eine Planke und wenigstens ein Querverriegelungsmittel vorgesehen ist. Dann sind die bedarfsweise ansonsten nicht unterstützten Abschnitte der Seitenplane zwischen zwei Rungen, seien es zwei Mittelrungen oder eine Mittelrunge und eine Eckrunge, durch die wenigstens eine Planke und das wenigstens eine Querverriegelungsmittel nach außen abgestützt. In diesem Zusammenhang kann es sich aus dem genannten Grund anbieten, wenn zwischen jeweils zwei benachbarten Rungen stets wenigstens eine Planke und wenigstens ein mit der wenigstens einen Planke verbundenes Querverriegelungsmittel vorgesehen ist.

Um den Aufbau der Seitenplane insgesamt zu vereinfachen, kann das wenigstens eine Querverriegelungsmittel zwischen zwei Planken vorgesehen und mit den beiden Planken verbunden sein. Dann können durch ein Querverriegelungsmittel zwei benachbarte Planken weiter nach innen verstellt werden, um ein übermäßiges Ausbeulen der Seitenplane zu verhindern. Dementsprechend kann es weiter bevorzugt sein, wenn jeweils zwei Planken mit einem Querverriegelungsmittel verbunden sind. Dann kann mit einer geringen Anzahl an Querverriegelungsmitteln ein Großteil der Seitenplane oder die gesamte Seitenplane gegenüber einem übermäßigen Ausbeulen nach außen gesichert werden.

Alternativ kann es aber auch zu einer konstruktiven Vereinfachung beitragen, wenn wenigstens im Wesentlichen jede Planke mit wenigstens einem Querverriegelungsmittel verbunden ist. Dann müssen nicht zwei Planken mit einem Querverriegelungsmittel zusammengefasst werden. Vielmehr kann die wenigstens eine Planke mit wenigstens einem Querverriegelungsmittel ausgestattet werden, was zudem einem einfachen Handling der Seitenplane mit dem wenigstens einen Querverriegelungsmittel der wenigstens einen Planke in der Freigabestellung dienlich sein kann.

Damit das wenigstens eine Querverriegelungsmittel einfach gehandhabt werden kann, kann das wenigstens eine Querverriegelungsmittel zum Verstellen von der Verriegelungsstellung in die Freigabestellung und zurück schwenkbar ausgebildet sein. Dann kann beispielsweise der Fahrer das Verstellen des Querverriegelungsmittels einfach bewerkstelligen. Dies gilt in besonderem Maße, wenn das Querverriegelungsmittel wenigstens im Wesentlichen parallel zur Seitenwand bzw. zur Seitenplane geschwenkt wird. Alternativ oder zusätzlich kann das Querverriegelungsmittel um eine Schwenkachse geschwenkt werden, die wenigstens im Wesentlichen senkrecht zur Seitenwand bzw. zur Seitenplane ausgerichtet ist. Alternativ oder zusätzlich kann das Verstellen des wenigstens einen Querverriegelungsmittels durch ein Verschieben des Querverriegelungsmittels bewerkstelligt werden. Auch dies lässt sich bedarfsweise leicht und zügig von dem Fahrer selbst durchführen. Um eine kompakte und konstruktiv einfache sowie zuverlässige Anordnung des Querverriegelungsmittels sicherzustellen, kann es sich anbieten, wenn das wenigstens eine Querverriegelungsmittel als an wenigstens einer Planke vorgesehener Schiebling ausgebildet ist. Der Schiebling kann dann mithin als Teil der Planke ausgebildet oder in die Planke integriert sein. Zum Verstellen des Querverriegelungsmittels von der Verriegelungsstellung in die Freigabestellung und zurück, und zwar jeweils gegenüber der zugehörigen Planke, kann das wenigstens eine Querverriegelungsmittel der Einfachheit halber gegenüber der Planke aus- und wieder eingefahren werden. Zum Zwecke eines formschlüssigen Anliegens eines Querverriegelungsmittels am Längsholm und eines formschlüssigen Anliegens eines Querverriegelungsmittels an der Bodenstruktur kann der wenigstens einen Planke ein oberes Querverriegelungsmittel und ein unteres Querverriegelungsmittel, bedarfsweise jeweils in Form eines Schieblings, zugeordnet sein.

Um ein versehentliches Verstellen des Querverriegelungsmittels bzw. Schieblings gegenüber der Planke zu vermeiden, kann das wenigstens eine Querverriegelungsmittel bzw. der wenigstens eine Schiebling in der Verriegelungsstellung und/oder der Freigabestellung formschlüssig an der wenigstens einen Planke gehalten sein. Dies ist insbesondere dann zweckmäßig, wenn das Querverriegelungsmittel bzw. der Schiebling in Längsrichtung der zugehörigen wenigstens einen Planke formschlüssig an der zugehörigen Planke festgelegt ist. Dies muss nicht bedeuten, dass das Querverriegelungsmittel bzw. der Schiebling quer zur wenigstens einen Planke verstellbar ausgebildet ist. Ein Verstellen des Querverriegelungsmittels bzw. des Schieblings längs zur Planke führt jedoch sehr einfach zu einem Verstellen des Querverriegelungsmittels bzw. des Schieblings von der Freigabestellung in die Verriegelungsstellung und zurück. Des Weiteren kann es sich anbieten, wenn das wenigstens eine Querverriegelungsmittel bzw. der wenigstens eine Schiebling zwischen einer Verschiebestellung zum Aus- und Einfahren gegenüber der Planke und einer Arretierstellung zum Beibehalten der aus- und eingefahrenen Stellung verstellt werden kann. Dabei kann das Verstellen in einer konstruktiv einfachen Ausgestaltung ein Schwenken darstellen. Dann kann beispielsweise der Fahrer das Querverriegelungsmittel bzw. den Schiebling problemlos aus der Arretierstellung in die Verschiebestellung verstellen, um ein Aus- oder Einfahren des Querverriegelungsmittels bzw. des Schieblings bewirken zu können, was in der Arretierstellung, etwa infolge eines Formschlusses zwischen dem Querverriegelungsmittel bzw. dem Schiebling und der Planke, unterbunden ist. Nachdem der Fahrer das Querverriegelungsmittel bzw. den Schiebling ein- oder ausgefahren hat, kann der Fahrer das Querverriegelungsmittel bzw. den Schiebling dann wieder in die Arretierstellung verstellen, um ein weiteres versehetliches Aus- oder Einfahren des Querverriegelungsmittels bzw. des Schieblings zu vermeiden.

Konstruktiv einfach und funktional bevorzugt kann es sein, wenn das wenigstens eine Querverriegelungsmittel bzw. der wenigstens eine Schiebling wenigstens zwei Teile aufweist, und zwar einen Teleskopabschnitt und einen Schwenkabschnitt. Der wenigstens eine Teleskopabschnitt dient dem Aus- und Einfahren des Schieblings gegenüber der Planke, wobei der Schwenkabschnitt gegenüber dem Teleskopabschnitt schwenkbar ausgebildet sein kann, um den Schiebling durch Schwenken des Schwenkabschnitts von der Arretierstellung in die Verschiebestellung und zurück verstellen zu können. Dabei kann eine weitere konstruktive Vereinfachung erreicht werden, wenn der Teleskopabschnitt des wenigstens einen Schieblings zum formschlüssigen Abstützen des Querverriegelungsmittels bzw. des Schieblings an dem Längsholm und/oder der Bodenstruktur in der Richtung seitlich nach außen bezogen auf die Seitenwand ausgebildet ist. Dem Teleskopabschnitt kann mithin eine Doppelfunktion zukommen.

Damit die Bedienung des Schwenkabschnitts etwa durch den Fahrer vereinfacht werden kann, weist der wenigstens eine Schwenkabschnitt des wenigstens einen Schieblings bedarfsweise einen Griffabschnitt zum manuellen Verstellen des Schieblings zwischen der Arretierstellung und der Verschiebestellung auf. Dies sorgt bedarfsweise auch dafür, dass das Handling des Querverriegelungsmittels selbsterklärend ist, so dass eine gesonderte Schulung beispielsweise des Fahrers entbehrlich ist und versehentliche Fehlbenutzungen nicht zu befürchten sind.

Dem Handling der Seitenplane als solches ist es dienlich, wenn der wenigstens einen Planke ein Planenroller zugeordnet ist, wobei der Planenroller längsverschiebbar am Längsholm gehalten ist. So kann die Seitenplane leicht auf- und zugeschoben werden. Dabei bietet es sich an, wenn die wenigstens eine Planke flexibel mit dem Planenroller verbunden ist. So lässt sich die wenigstens eine Planke durch Verstellen des Querverriegelungsmittels von der Freigabestellung in die Verriegelungsstellung wenigstens teilweise nach innen in Richtung des Laderaums bewegen. Dabei bietet es sich der Zuverlässigkeit und der Einfachheit halber an, wenn der wenigstens eine Planenroller mit der wenigstens einen Planke über die Seitenplane und/oder einen Gurt verbunden ist. Der Planenroller kann aus funktionalen Gründen nach Art einer am Längsholm gerührten Laufkatze oder eines entsprechenden Laufwagens ausgebildet sein.

Der wenigstens einen Planke kann zudem eine Spanneinrichtung zugeordnet sein. Die Spanneinrichtung dient dann insbesondere dem formschlüssigen Angreifen an der Bodenstruktur und dem Strammziehen der Seitenplane in im Wesentlichen vertikaler Richtung gegenüber der Bodenstruktur. Das Spannen der Seitenplane über die Spanneinrichtung führt dann zu einer weiteren Aussteifung der Planke bzw. der Seitenplane im Bereich der Planke. Dabei kann die wenigstens eine Planke mit der wenigstens einen Spanneinrichtung flexibel verbunden sein. Hierzu eignet sich dann insbesondere die Seitenplane selbst und/oder ein Gurt der Seitenplane.

Hinsichtlich der Konstruktion und des Handlings kann es zweckmäßig sein, wenn wenigstens einer Planke, insbesondere wenigstens im Wesentlichen jeder Planke, am oberen Ende und am unteren Ende jeweils ein Querverriegelungsmittel zugeordnet ist. Dann kann in einfacher Weise ein formschlüssiges Abstützen eines Querverriegelungsmittels am Längsholm und ein formschlüssiges Abstützen des anderen Querverriegelungsmittels an der Bodenstruktur bewirkt werden. Es kann aber auch vorgesehen sein, dass wenigstens im Wesentlichen jeder Planke nur ein Querverriegelungsmittel zugeordnet ist, wenn dies funktional als ausreichend angesehen wird. Dann können die Querverriegelungsmittel der Einfachheit halber stets den unteren Bereichen der Planken oder dem oberen Bereich der Planken zugeordnet sein. Aus funktionaler Sicht kann es sich auch anbieten, die Querverriegelungsmittel wenigstens im Wesentlichen abwechselnd den oberen und den unteren Bereichen der Planken zuzuordnen.

Eine besonders wirkungsvolle Aussteifung der Seitenplane kann erhalten werden, wenn so viele Querverriegelungsmittel in solch einer Weise vorgesehen sind, dass alle Planken einer Seitenplane dann, wenn die Querverriegelungsmittel alle in die Verriegelungsstellung verstellt worden sind, formschlüssig gegenüber dem Längsholm und/oder der Bodenstruktur gehalten sind, und zwar in einer Richtung seitlich nach außen. Dies insbesondere dann, wenn die Planken dabei wenigstens abschnittsweise weiter innen bezogen auf die Seitenwand angeordnet sind, als wenn sich die Querverriegelungsmittel allesamt in der Freigabestellung befinden würden. Daraus kann sich ableiten, dass die Anzahl der Querverriegelungsmittel einem ganzzahligen Vielfachen der Anzahl der Planen einer Seitenplane entsprechen. Insbesondere sind der Einfachheit halber bei einer Seitenplane genauso viele oder doppelt so viele Querverrieglungsmittel vorgesehen wie Planken derselben Seitenplane. Wenn wenigstens ein Querverriegelungsmittel jedoch zum wenigstens teilweisen Verstellen von wenigstens zwei benachbarten Planken nach innen bezogen auf die Seitenwand des Planenaufbaus vorgesehen ist, kann die Anzahl der Querverriegelungsmittel aber auch nur der Hälfte, einem Drittel, einem Viertel usw. der Anzahl der Planken derselben Seitenplanen entsprechen.

Denkbar ist grundsätzlich auch, dass nicht jeder Planke einer Seitenwand wenigstens ein Querverriegelungsmittel zugeordnet ist. Dies wäre beispielsweise möglich, wenn die Planken, denen wenigstens ein Querverriegelungsmittel zugeordnet ist, die von der Ladung auf die Seitenplane ausgeübte Last zuverlässig aufnehmen können. Beispielsweise könnten entlang der Seitenplane die Planken abwechselnd mit wenigstens einem Querverriegelungsmittel verbunden und nicht mit einem Querverriegelungsmittel verbunden sein. Es kann aber auch in bestimmten Fällen bevorzugt sein, wenn nur den vorderen, nur den hinteren und/oder nur den mittleren Planken wenigstens ein Querverriegelungsmittel zugeordnet ist. Unter bestimmten Randbedingungen kann es auch zweckmäßig sein, wenn den Planken, insbesondere wenigstens im Wesentlichen abwechselnd, ein Querverriegelungsmittel am oberen Ende der Planke zum formschlüssigen Abstützen an dem Längsholm und ein Querverriegelungsmittel am unteren Ende der Planke zum formschlüssigen Abstützen an der Bodenstruktur vorgesehen wäre.

Nachfolgend ist die Erfindung anhand einer lediglich ein Ausführungsbeispiel darstellenden Zeichnung näher beschrieben. In der Zeichnung zeigt
- Fig. 1: ein Nutzfahrzeug mit einem erfindungsgemäßen Planenaufbau in einer perspektivischen Ansicht,
- Fig. 2: einen Abschnitt der Seitenwand des Planenaufbaus aus Fig. 1 mit Querverriegelungsmitteln in einer Freigabestellung in einer perspektivischen Ansicht aus dem Laderaum,
- Fig. 3: eine Planke der Seitenplane aus Fig. 2 in einer perspektivischen Ansicht,
- Fig. 4: ein oberes Querverrieglungsmittel der Planke aus Fig. 3 in perspektivischen Ansichten,
- Fig. 5: ein unteres Querverrieglungsmittel der Planke aus Fig. 3 in perspektivischen Ansichten,
- Fig. 6: den Abschnitt der Seitenwand aus Fig. 2 mit den Querverrieglungsmitteln in einer Verriegelungsstellung in einer perspektivischen Ansicht aus dem Laderaum,
- Fig. 7A-B: ein Detail der Seitenwand der Fig. 6 in der Verriegelungsstellung und der Freigabestellung in einer schematischen Schnittansicht quer zur Längserstreckung der Seitenwand,
- Fig. 8A-C: ein Detail der Seitenplane aus Fig. 2 in unterschiedlichen Stellungen des unteren Querverrieglungsmittels aus Fig. 4 und
- Fig. 9A-C: ein Detail der Seitenplane aus Fig. 2 in unterschiedlichen Stellungen des unteren Querverrieglungsmittels aus Fig. 5.

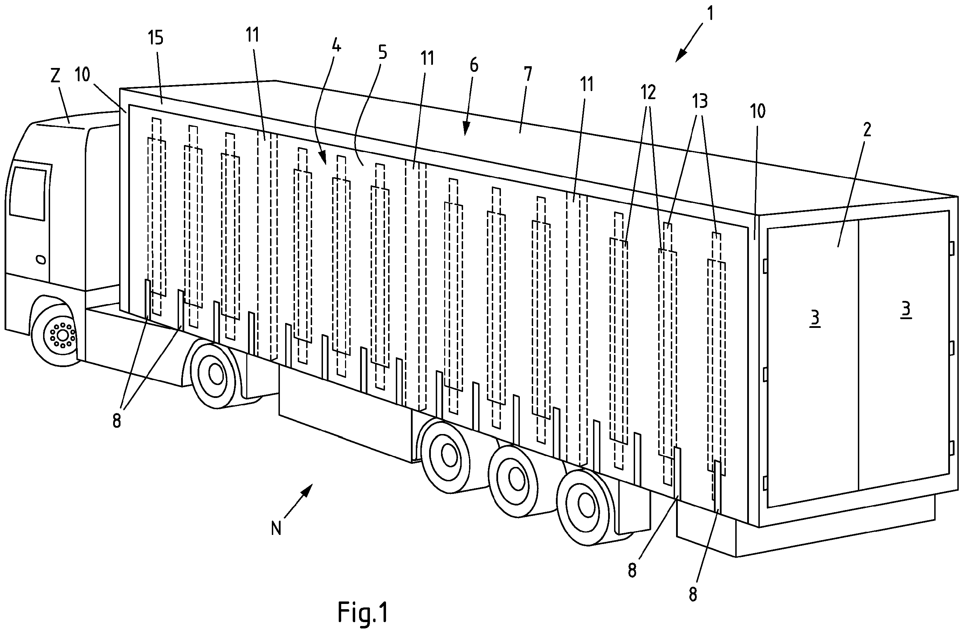

In der Fig. 1 ist ein von einer Zugmaschine Z gezogenes Nutzfahrzeug N in Form eines Sattelaufliegers dargestellt, der einen Planenaufbau 1 im Sinne eines Curtainsiders aufweist. Der Plananaufbau 1 weist an der Rückwand 2 zwei Flügeltüren 3 und seitlich zwei die Seitenwand 4 bildende Seitenplanen 5 sowie am Dach 6 eine Dachplane 7 auf. Die Seitenplanen 5 können von der dargestellten geschlossenen Stellung in eine nicht dargestellte geöffnete Stellung verstellt werden, in der die Seitenplanen 5 die Längsseiten des Planenaufbaus 1 zum Be- und Entlanden freigeben. Zum Spannen der Seitenplane 5 in der geschlossenen Stellung in vertikaler Richtung sind am unteren Rand der Seitenplane 5 Spanneinrichtungen 8 vorgesehen, die in den zugeordneten Rand der Bodenstruktur 9 eingehakt und strammgezogen werden können. In der Längsrichtung der Seitenplane 5 kann diese über nicht dargestellte Planenspannrohre gespannt werden. Dabei werden die Seitenplanen 5 an gegenüberliegenden Eckrungen 10 gehalten und erstrecken sich beim dargestellten und insoweit bevorzugten Planenaufbau 1 entlang von jeweils drei Mittelrungen 11, die das Dach 6 gegenüber der Bodenstruktur 9 abstützen. Zwischen benachbarten Rungen 10,11 sind jeweils drei Planentaschen 12 vorgesehen, in die jeweils eine Planke 13 in Form eines Aluminiumprofils eingesteckt ist, um die Seitenplane 5 in der geschlossenen Stellung auszusteifen.

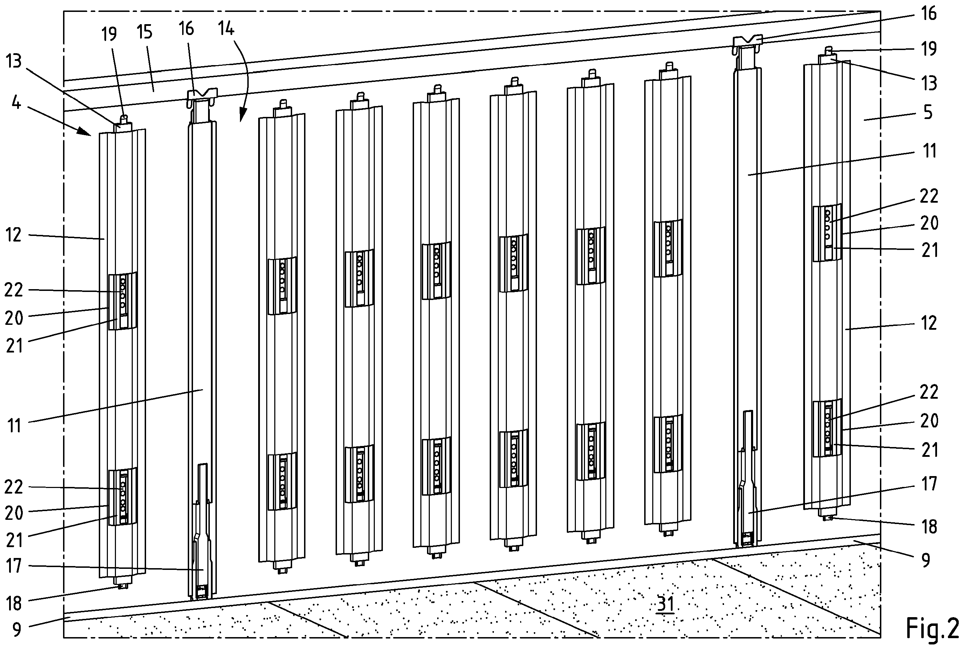

In der Fig. 2 ist ein Abschnitt des Planenaufbaus 1 im Bereich einer Seitenwand 4 dargestellt, und zwar in einer Ansicht von innen aus dem Laderaum 14 des Planenaufbaus 1 gesehen. Der besseren Übersichtlichkeit halber ist in der Fig. 2 das Dach 6 des Planenaufbaus 1 bis auf den der Seitenwand 4 zugeordneten Längsholm 15 weggelassen worden. Dargestellt sind jedoch zwei Mittelrungen 11, die mit ihrem oberen Ende mit einem Planenroller 16 in dem der Seitenplane 5 zugeordneten Längsholm 15 geführt ist. Die Mittelrungen 11 sind mit ihren unteren Enden lösbar an der Bodenstruktur 9 festgelegt. Durch Verstellen des dargestellten Hebelmechanismus 17 kann eine Mittelrunge 11 von der Bodenstruktur 9 getrennt und entlang des Längsholms 15 mit Hilfe des Planenrollers 16 zur Seite geschoben werden. Damit kann die entsprechende Seite des Planenaufbaus 1 zum Be- und Entladen freigegeben werden. In der geschlossenen Stellung der Seitenplanen 5 sind zwischen benachbarten Mittelrungen 11 und auch zwischen einer Mittelrunge 11 und einer benachbarten Eckrunge 10 an der Innenseite der Seitenplane 5 Planentaschen 12 vorgesehen. Diese Planentaschen 12 nehmen Planken 13 auf, die als Profile, insbesondere aus Aluminium, ausgebildet sind. Dabei können die Planentaschen 12 mit der Seitenplane 5 beispielsweise vernäht und/oder verschweißt sein.

Dem oberen Ende der Planken 13 und dem unteren Ende der Planken 13 sind jeweils Querverriegelungsmittel 18,19 zugeordnet, die in der Fig. 2 in einer Freigabestellung angeordnet sind. In der Freigabestellung sind die Querverriegelungsmittel 18,19 weder direkt mit dem Längsholm 15 noch direkt mit der Bodenstruktur 9 verbunden. Mithin kann die Seitenplane 5 in dieser Stellung der Querverriegelungsmittel 18,19 zusammen mit den Planken 13 aufgezogen und wieder zugezogen werden, ohne die Planken 13 oder die Querverriegelungsmittel 18,19 gesondert verstellen zu müssen. In der geschlossenen Stellung der Seitenplane 5 mit den Querverriegelungsmitteln 18,19 in der Freigabestellung bildet die Seitenplane 5 eine definierte Seitenwand 4 des Planenaufbaus 1. Um die Querverriegelungsmittel 18,19 von der dargestellten Freigabestellung in die nicht dargestellte Verriegelungsstellung verstellen zu können, sind in den Planentaschen 12 Aussparungen 20 vorgesehen, die eine Handhabung der Querverriegelungsmittel 18,19 ermöglicht.

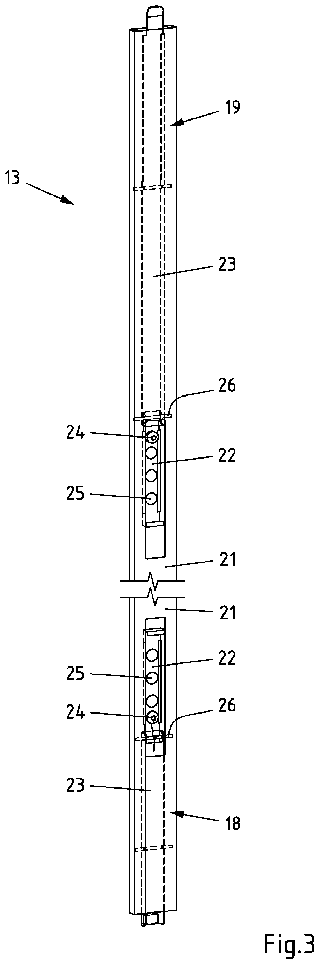

In der Fig. 3 ist eine Planke 13 mitsamt den zugehörigen Querverriegelungsmitteln 18,19 separat dargestellt. Die Planke 13 umfasst dabei einen rigiden Plankenkörper 21, der im Prinzip in Form eines Profils ausgebildet ist und an dem oben und unten jeweils ein Querverriegelungsmittel 18,19 gehalten ist. Dabei wird das dargestellte und insoweit bevorzugte Querverriegelungsmittel 18,19 durch einen Schwenkabschnitt 22 zum Verstellen des Querverriegelungsmittels 18,19 zwischen einer Arretierstellung und einer Verschiebestellung und einen Teleskopabschnitt 23 zum Ausfahren und zum Einfahren gegenüber der Planke 13, und zwar parallel zu ihrer Längserstreckung der Planke 13, gebildet. Die Schwenkabschnitte 22 der Querverrieglungsmittel 18,19 sind über die Aussparungen 20 in den Planentaschen 12 für den Fahrer zugänglich. In der Arretierstellung sind die Schwenkabschnitte 22 formschlüssig an der Planke 13 gehalten, wozu Fingerelemente 24 der Planke 13 in Aussparungen 25 der Schwenkabschnitte 22 eingreifen.

Da die dargestellten Querverriegelungsmittel 18,19 aus- und wieder eingefahren werden können, können diese auch als Schiebling bezeichnet werden. Die Querverriegelungsmittel 18,19 könnten in einer anderen Ausgestaltung aber auch zum Verschwenken zwischen der Verriegelungsstellung und der Freigabestellung vorgesehen und damit nicht im Sinne eines Schieblings ausgebildet sein. Bei dem dargestellten und insoweit bevorzugten Planenaufbau 1 sind die Planken 13 an ihrem unteren Ende, bedarfsweise mit einem nicht dargestellten Gurt, flexibel an den Spanneinrichtungen 8 verbunden, um die Seitenplane 5 in der geschlossenen Stellung durch das Spannen der Spanneinrichtungen 8 weiter aussteifen zu können. An ihrem oberen Ende können die Planken 13, bedarfsweise mit einem nicht dargestellten Gurt, flexibel mit Planenrollern 16 verbunden sein. Beim Öffnen und Schließen der Seitenplane 5 werden die Planken 13 dann wenigstens im Wesentlichen über die Planenroller 16 am Längsholm 15 gehalten. Das Öffnen und Schließen der Seitenplane 5 kann dann mit sehr geringem Kraftaufwand erfolgen. Dabei können die angesprochenen Gurte lose an der Seitenplane 5 vorgesehen oder fest mit der Seitenplane 5 verbunden sein.

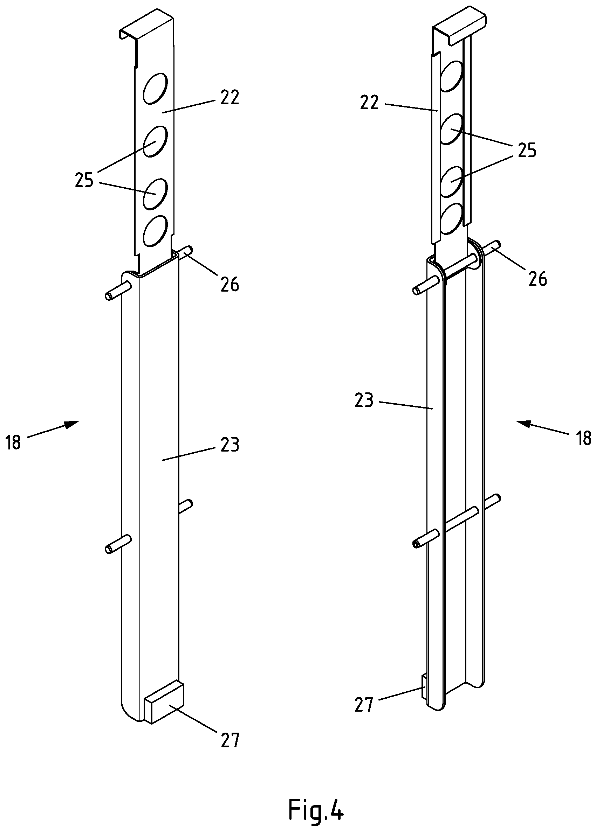

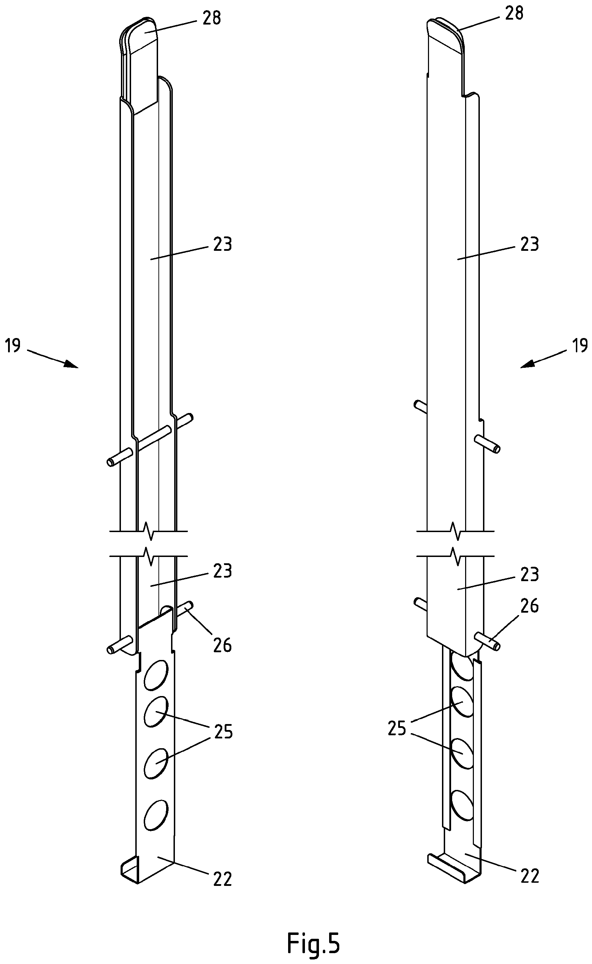

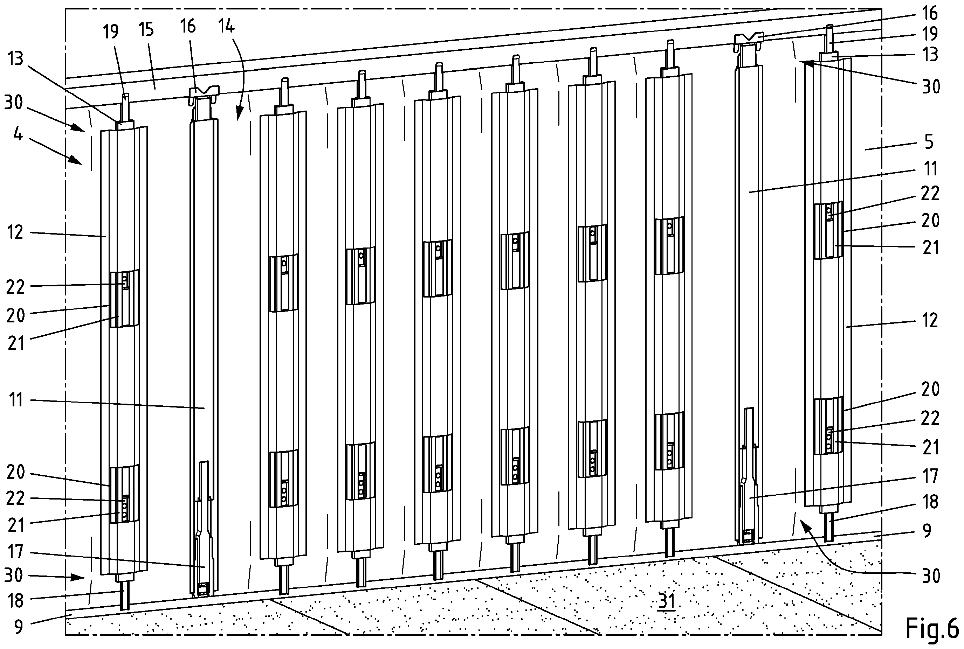

Die Querverriegelungsmittel 18,19 sind der besseren Anschaulichkeit halber in der Fig. 4 und der Fig. 5 separat dargestellt. Die Schwenkabschnitte 22 sind bei den dargestellten und insoweit bevorzugten Querverriegelungsmitteln 18,19 über Schwenkachsen 26 mit den Teleskopabschnitten 23 verbunden. Die Querverriegelungsmittel 18,19 sind insbesondere an den freien Enden der Teleskopabschnitte 23 unterschiedlich ausgebildet. Bei dem unteren Querverrieglungsmittel 18 der Fig. 4 ist an dem freien Ende ein Anschlagmittel 27 vorgesehen, mit dem sich das Querverriegelungsmittel 18 an der Bodenstruktur 9 abstützen kann. An dem in der Fig. 5 dargestellten oberen Querverriegelungsmittel 19 ist eine abgeschrägte Führungsfläche 28 vorgesehen, mit der das Querverriegelungsmittel 19 bei Verstellen aus der Freigabestellung in die Verriegelungsstellung innen an dem Längsholm 15 der zugehörigen Seite des Planenaufbaus 1 abgleiten kann. Dieses Abgleiten der Führungsfläche 28 des Querverriegelungsmittels 19 führt infolge der formschlüssigen Verbindung des Querverriegelungsmittels 19 mit der Planke 13 dazu, dass die entsprechende Planke 13 bei geschlossener Seitenplane 5 und in der Verriegelungsstellung des Querverriegelungsmittels 19 wenigstens abschnittsweise weiter innen bezogen auf die entsprechende Seitenwand 4 angeordnet ist als dies zuvor der Fall gewesen ist, als sich das Querverriegelungsmittel 19 noch in der Freigabestellung befunden hat. Mit anderen Worten wird die Planke 13 an ihrem oberen Ende nach innen in Richtung des Laderaums 14 geschoben bzw. verstellt, wenn das obere Querverriegelungsmittel 19 aus der in der Fig. 2 dargestellten Freigabestellung in die in der Fig. 6 dargestellte Verriegelungsstellung verstellt wird.

Bedarfsweise kann zuvor das untere Querverriegelungsmittel 18 aus der Freigabestellung in die Verriegelungsstellung verstellt werden. Dazu kann der Fahrer den Schwenkabschnitt 22 ergreifen und mit dessen Hilfe die Planke 13 etwas nach innen in Richtung des Laderaums 14 ziehen, um sodann den Teleskopabschnitt 23 nach unten in die Verriegelungsstellung auszufahren, so dass das Querverriegelungsmittel 18 mit dem zugehörigen Anschlagmittel 27 von innen hinter die Bodenstruktur 9, insbesondere die sich längs der Bodenstruktur 9 erstreckende Palettenanschlagleiste 29 der Bodenstruktur 9, greift. Das untere Ende der mit dem Querverriegelungsmittel 18 verbundenen Planke 13 bleibt daher gegenüber der Seitenwand 4 mit dem Querverriegelungsmittel 18 in der Freigabestellung weiter innen in Bezug auf die Seitenwand 4 angeordnet und kann infolge des Formschlusses mit der Bodenstruktur 9 nicht wieder zurück nach außen gelangen. Die leicht nach innen in Richtung des Laderaums 14 gezogene Seitenplane 5 ist in der Fig. 6 gegenüber der Fig. 2 durch die entsprechende Krümmung der Seitenplane 5 andeutende Striche 30 veranschaulicht.

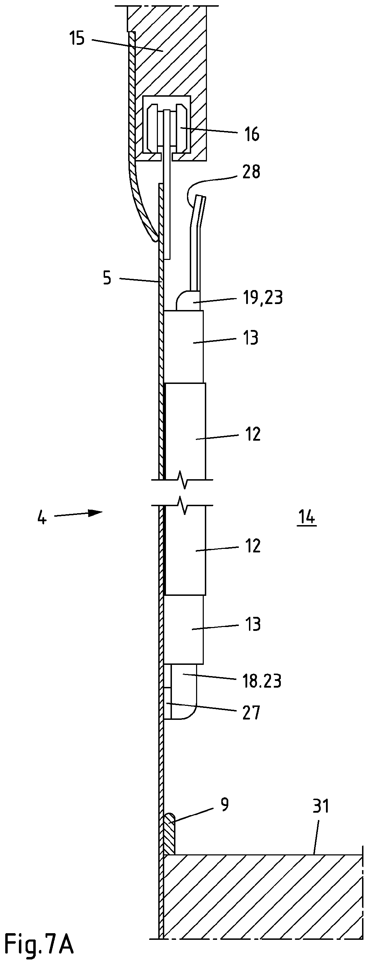

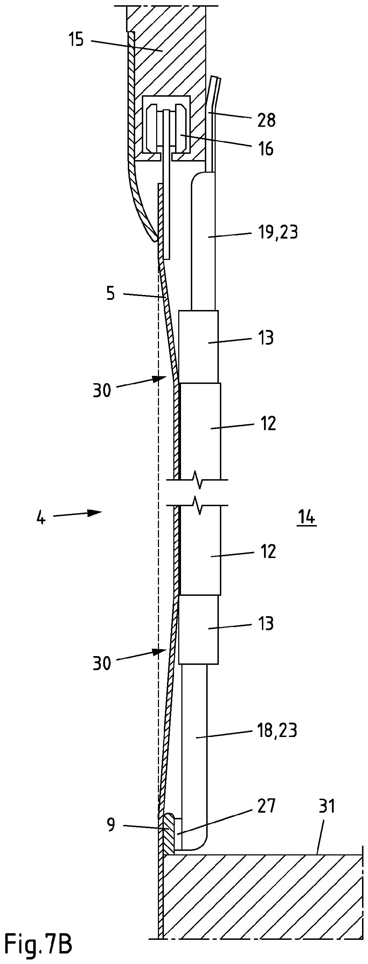

Die Unterschiede hinsichtlich der Anordnung einer Planke 13 und der Seitenwand 4 beim Verstellen der der Planke 13 zugeordneten Querverriegelungsmittel 18,19 ist in den Fig. 7A-B in einer Detailansicht dargestellt. In der Fig. 7A ist die Seitenplane 5 mitsamt der Planke 13 und den zugehörigen Querverriegelungsmitteln 18,19 in der Freigabestellung dargestellt, während in der Fig. 7B derselbe Abschnitt der Seitenplane 5 mit den Querverriegelungsmitteln 18,19 in der Verriegelungsstellung dargestellt ist. Zudem ist in der Fig. 7B zum Vergleich die Anordnung der Seitenplane 5 gemäß Fig. 7A mittels gestrichelter Linien veranschaulicht. Die Seitenplane 5 und die Planken 13 sind dabei wenigstens abschnittsweis in der Fig. 7B gegenüber der Darstellung in der Fig. 7A um etwa 30 mm weiter innen in Richtung des Laderaums 14 angeordnet. Durch eine nicht dargestellte, nach außen gegen die Seitenplane 5 drückende Ladung könnten die Seitenplane 5 und die Planken 13 wieder wenigstens abschnittsweise in die Ausgangsstellung gemäß Fig. 7A zurück verstellt werden, ohne dass die zulässige Breite des Planenaufbaus 1 überschritten wird.

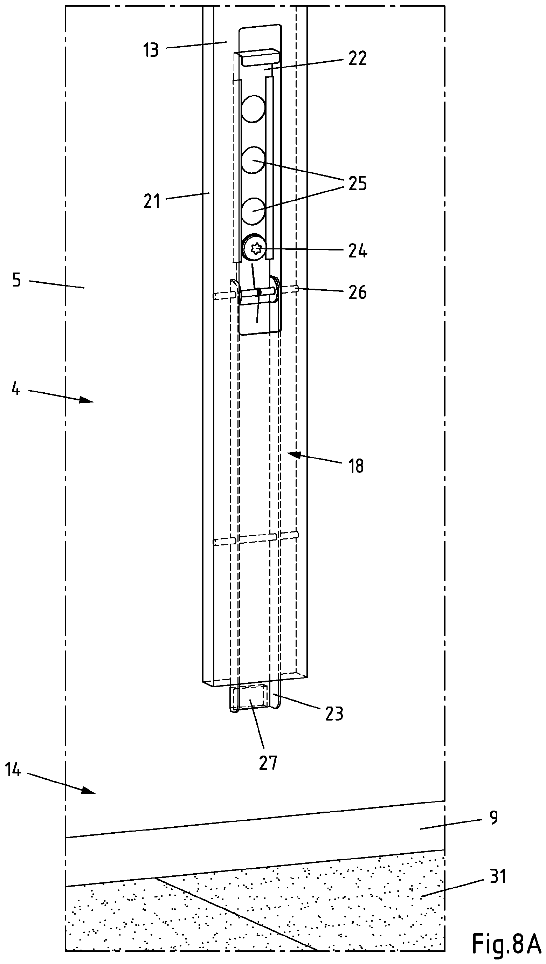

In den Fig. 8A-C ist das Verstellen des unteren Querverriegelungsmittels 18 einer Planke 13 von der Freigabestellung in die Verriegelungsstellung dargestellt, was dazu führt, dass die Planke 13 wenigstens in ihrem unteren Bereich nach innen in Richtung des Laderaums 14 verstellt wird. Der besseren Übersichtlichkeit halber ist in den Fig. 8A-C die Planentasche 12 zum Halten der Planke 13 nicht dargestellt worden. In der Fig. 8A ist das untere Querverrieglungsmittel 18 in der Freigabestellung angeordnet, weshalb sich das Querverrieglungsmittel 18 nicht an der Bodenstruktur 9 abstützt. Die Planke 13 hängt vielmehr alleine durch die nicht dargestellte Planentasche 12 fixiert an der Seitenplane 5, die sich in der geschlossenen Stellung befindet. Das Querverriegelungsmittel 18 wird dabei relativ zur Planke 13 an dieser durch ein Fingerelement 24 formschlüssig gehalten. Das Fingerelement 24 greift zu diesem Zweck in eine von mehreren Aussparungen 25 des Schwenkabschnitts 22 des Querverriegelungsmittels 18 ein.

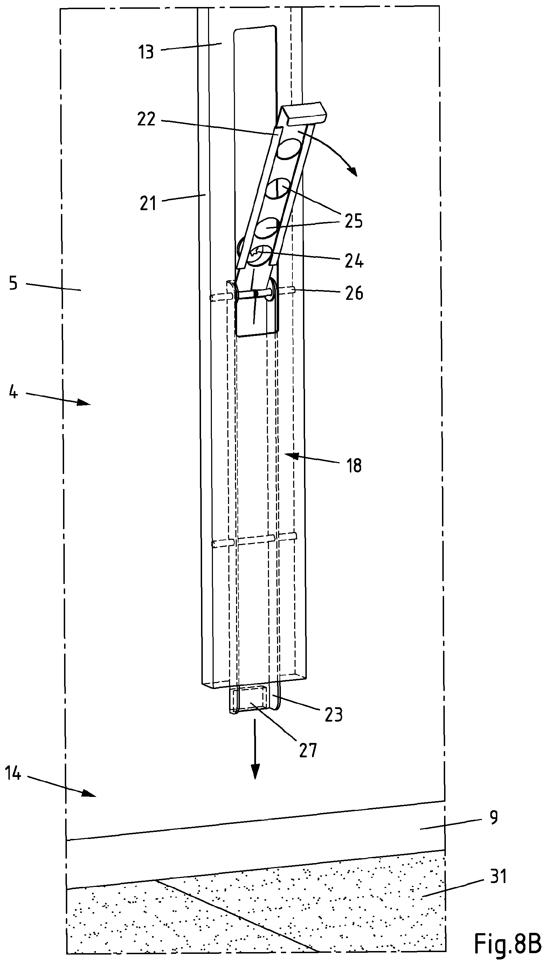

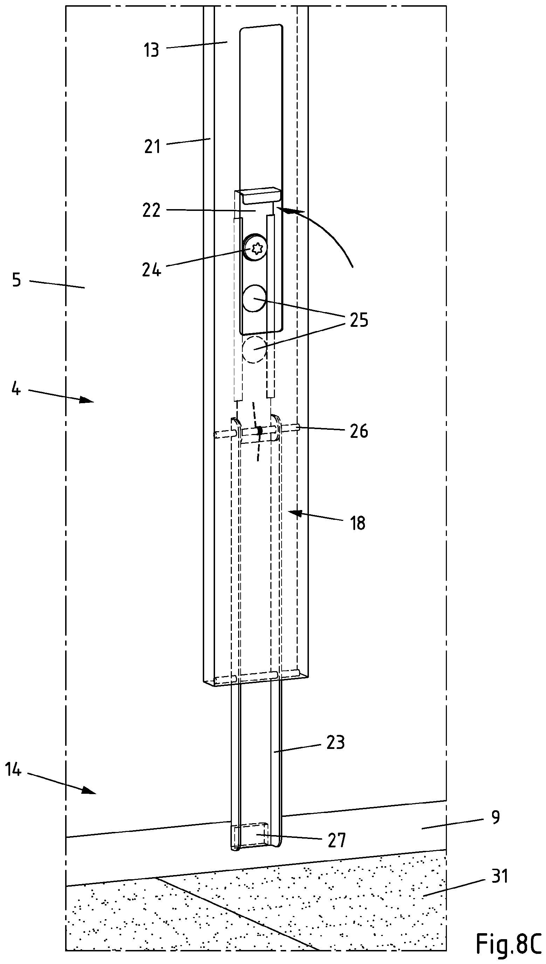

Der Fahrer kann nun gemäß Fig. 8B aus dem Laderaum 14 des Planenaufbaus 1 den Schwenkabschnitt 22 des Querverriegelungsmittels 18 ergreifen und dieses beim dargestellten und insoweit bevorzugten Planenaufbau 1 nach innen in den Laderaum 14 und nach unten in Richtung des Ladebodens 31 schwenken. Dabei wird der Schwenkabschnitt 22 des Querverriegelungsmittels 18 um eine Schwenkachse 26 in der Verbindung zwischen dem Schwenkabschnitt 22 und dem Teleskopabschnitt 23 des Querverriegelungsmittels 18 geschwenkt. Der Teleskopabschnitt 23 bleibt beim Schwenken des Schwenkabschnitts 22 mithin wenigstens im Wesentlichen ortsfest angeordnet. Durch das Schwenken des Schwenkabschnitts 22 gelangt das Fingerelement 24 der Planke 13 außer Eingriff mit der entsprechenden Aussparung 25 des Schwenkabschnitts 22 des Querverriegelungsmittels 18. Darum kann nun der Schwenkabschnitt 22 vom Fahrer nach unten verschoben werden, was infolge der Verbindung des Schwenkabschnitts 22 mit dem Teleskopabschnitts 23 dazu führt, dass der Teleskopabschnitt 23 gegenüber dem unteren Ende der Planke 13 in Richtung der Bodenstruktur 9 ausgefahren wird. Da der Fahrer den Schwenkabschnitt 22 zudem nach innen in Richtung des Laderaums 9 zieht, hintergreift das Querverriegelungsmittel 18 in der in der Fig. 8C dargestellten Verriegelungsstellung mit dem Anschlagmittel 27 formschlüssig die Innenseite der Palettenaschlagleiste 29 der Bodenstruktur 9. Dieser Formschluss sorgt dafür, dass das Querverriegelungsmittel 18 nicht zurück nach außen gelangen kann und stattdessen zusammen mit dem unteren Bereich der Planke 13 weiter innen bezogen auf den Laderaum 14 angeordnet verharrt, als ohne den entsprechenden Formschluss, wie dies in der Fig. 8A dargestellt ist.

Durch Zurückschwenken des Schwenkabschnitts 22 des Querverriegelungsmittels 18 in die Planke 13 greift das Fingerelement 24 formschlüssig in eine andere Aussparung 25 des Schwenkabschnitts 22 ein. Dieser Formschluss sorgt dafür, dass sich das Querverriegelungsmittel 18 nicht versehentlich zurück in die Freigabestellung gemäß Fig. 8A verstellt. Das Querverriegelungsmittel 18 und der untere Bereich der Planke 13 können wieder in die in der Fig. 8A dargestellte Stellung zurückverstellt werden, indem der Schwenkabschnitt 22 erneut so weit nach vorne bzw. innen geschwenkt wird, dass das Fingerelement 24 und die Aussparung 25 des Schwenkabschnitts 22 außer Eingriff gelangen, um den Schwenkabschnitt 22 anschließend zusammen mit dem Teleskopabschnitt 23 nach oben ziehen zu können. Anschließend kann der Schwenkabschnitt 22 wieder zurück nach hinten geschwenkt werden, damit das Fingerelement 24 wieder formschlüssig in eine Aussparung 25 des Schwenkabschnitts 22 eingreift, um das Querverriegelungsmittel 18 gegenüber der Planke 13 zu arretieren.

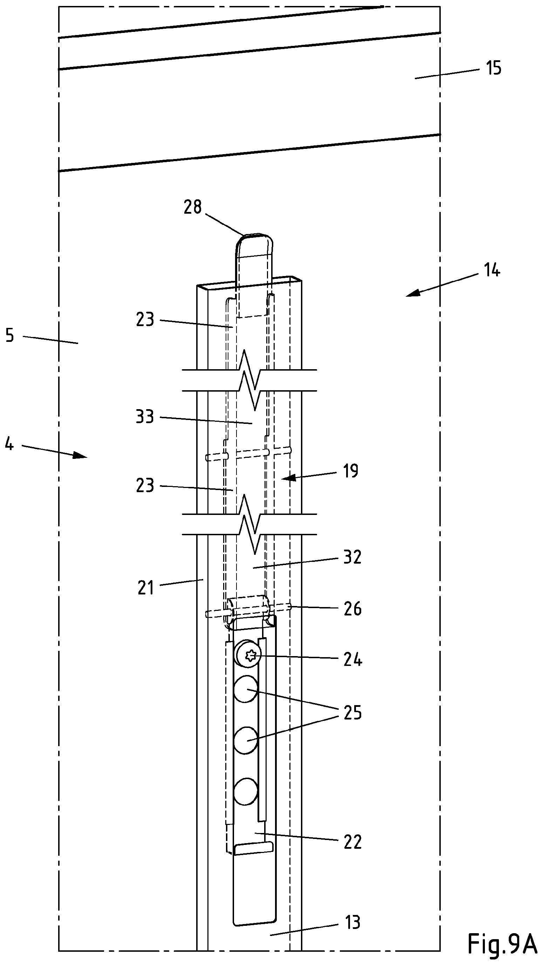

In den Fig. 9A-C ist das Verstellen des oberen Querverriegelungsmittels 19 einer Planke 13 von der Freigabestellung in die Verriegelungsstellung dargestellt, was dazu führt, dass die Planke 13 wenigstens in ihrem oberen Bereich nach innen in Richtung des Laderaums 14 verstellt wird. Der besseren Übersichtlichkeit halber ist in den Fig. 9A-C die Planentasche 12 zum Halten der Planke 13 nicht dargestellt worden. In der Fig. 9A ist das obere Querverrieglungsmittel 19 in der Freigabestellung angeordnet, weshalb sich das Querverrieglungsmittel 19 nicht am Längsholm 15 abstützt. Die Planke 13 hängt vielmehr alleine durch die nicht dargestellte Planentasche 12 fixiert an der Seitenplane 5, die sich in der geschlossenen Stellung befindet. Das Querverriegelungsmittel 19 wird dabei relativ zur Planke 13 an dieser durch ein Fingerelement 24 formschlüssig gehalten. Das Fingerelement 24 greift zu diesem Zweck in eine von mehreren Aussparungen 25 des Schwenkabschnitts 22 des Querverriegelungsmittels 19 ein.

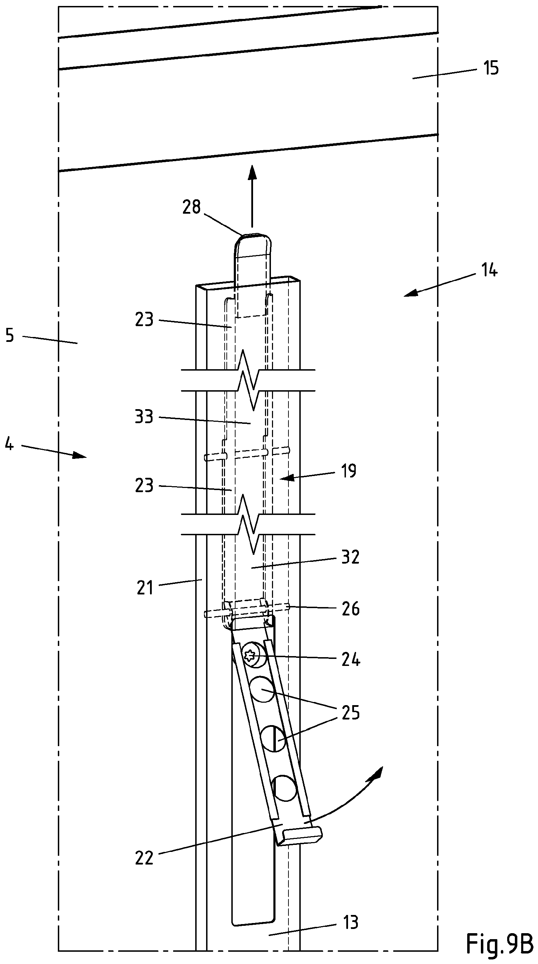

Der Fahrer kann nun gemäß Fig. 9B aus dem Laderaum 14 des Planenaufbaus 1 den Schwenkabschnitt 22 des Querverriegelungsmittels 19 ergreifen und dieses beim dargestellten und insoweit bevorzugten Planenaufbau 1 nach innen in den Laderaum 14 und nach oben in Richtung des Dachs 6 schwenken. Dabei wird der Schwenkabschnitt 22 des Querverriegelungsmittels 19 um eine Schwenkachse 26 in der Verbindung zwischen dem Schwenkabschnitt 22 und dem Teleskopabschnitt 23 des Querverriegelungsmittels 19 geschwenkt. Der Teleskopabschnitt 23 bleibt beim Schwenken des Schwenkabschnitts 22 mithin wenigstens im Wesentlichen ortsfest angeordnet. Durch das Schwenken des Schwenkabschnitts 22 gelangt das Fingerelement 24 der Planke 13 außer Eingriff mit der entsprechenden Aussparung 25 des Schwenkabschnitts 22 des Querverriegelungsmittels 19. Darum kann nun der Schwenkabschnitt 22 vom Fahrer nach oben verschoben werden, was infolge der Verbindung des Schwenkabschnitts 22 mit dem Teleskopabschnitt 23 dazu führt, dass der Teleskopabschnitt 23 gegenüber dem oberen Ende der Planke 13 in Richtung des Längsholms 15 ausgefahren wird.

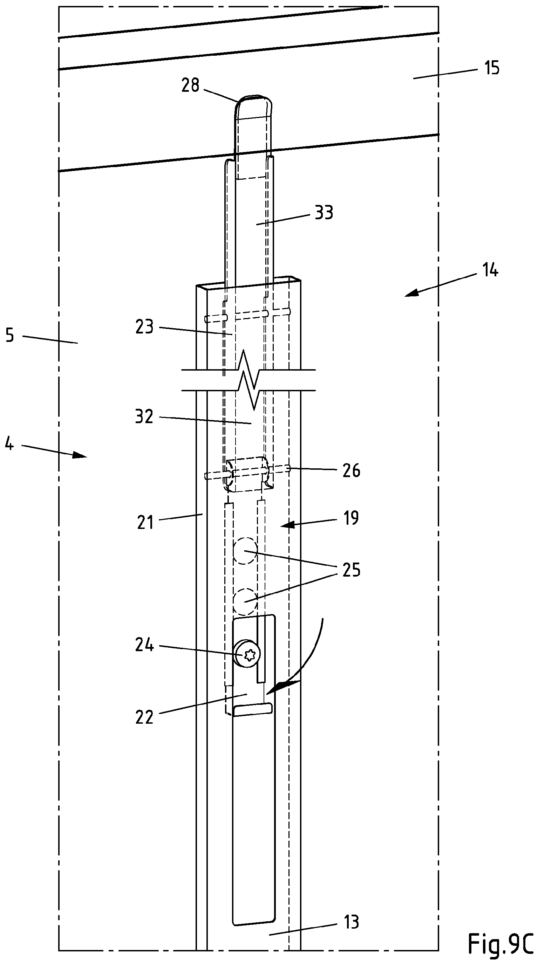

Um ein Verkeilen des Teleskopabschnitts 23 in der Planke 13 zu vermeiden, ist dieser zweiteilig ausgebildet, wobei beide Teile 32,33 über eine Schwenkachse 26 gelenkig miteinander verbunden sind. Das obere Ende des Querverriegelungsmittels 19 weist eine Führungsfläche 28 auf, die beim Ausfahren nach oben in Anlage an den Längsholm 15 gelangt und dabei an dem Längsholm 15 abgleitet. Infolge der Abschrägung der Führungsfläche 28 wird das obere Querverriegelungsmittel 19 und damit der obere Bereich der Planke 13 nach innen in Richtung des Laderaums 14 verstellt. Zudem wird so ein formschlüssiges Hintergreifen des Längsholms 15 durch das Querverriegelungsmittel 19 an der Innenseite des Längsholms 19 bewirkt, wie dies in der Fig. 9C dargestellt ist. Dieser Formschluss sorgt dafür, dass das Querverriegelungsmittel 19 nicht zurück nach außen gelangen kann und stattdessen zusammen mit dem oberen Bereich der Planke 13 weiter innen bezogen auf den Laderaum 14 angeordnet verharrt, als ohne den entsprechenden Formschluss, wie dies in der Fig. 9A dargestellt ist.

Durch Zurückschwenken des Schwenkabschnitts 22 des Querverriegelungsmittels 19 in die Planke 13 greift das Fingerelement 24 formschlüssig in eine andere Aussparung 25 des Schwenkabschnitts 22 ein. Dieser Formschluss sorgt dafür, dass sich das Querverriegelungsmittel 19 nicht versehentlich zurück in die Freigabestellung gemäß Fig. 9A verstellt. Das Querverriegelungsmittel 19 und der obere Bereich der Planke 13 können wieder in die in der Fig. 9A dargestellte Stellung zurückverstellt werden, indem der Schwenkabschnitt 22 erneut so weit nach vorne bzw. innen geschwenkt wird, dass das Fingerelement 24 und die Aussparung 25 des Schwenkabschnitts 22 außer Eingriff gelangen, um den Schwenkabschnitt 22 anschließend zusammen mit dem Teleskopabschnitt 23 nach unten ziehen zu können. Anschließend kann der Schwenkabschnitt 22 wieder zurück nach hinten geschwenkt werden, damit das Fingerelement 24 formschlüssig in eine Aussparung 25 des Schwenkabschnitts 22 eingreift, um das Querverriegelungsmittel 19 gegenüber der Planke 13 zu arretieren.

### Bezugszeichenliste

- 1: Planenaufbau
- 2: Rückwand
- 3: Flügeltür
- 4: Seitenwand
- 5: Seitenplane
- 6: Dach
- 7: Dachplane
- 8: Spanneinrichtung
- 9: Bodenstruktur
- 10: Eckrunge
- 11: Mittelrunge
- 12: Planentasche
- 13: Planke
- 14: Laderaum
- 15: Längsholm
- 16: Planenroller
- 17: Hebelmechanismus
- 18,19: Querverriegelungsmittel
- 20: Aussparung
- 21: Plankenkörper
- 22: Schwenkabschnitt
- 23: Teleskopabschnit
- 24: Fingerelement
- 25: Aussparungen
- 26: Schwenkachse
- 27: Anschlagmittel
- 28: Führungsfläche
- 29: Palettenanschlagleiste
- 30: Strich
- 31: Ladeboden
- 32,33: Teil
- N: Nutzfahrzeug
- Z: Zugmaschine

## Patentansprüche

1. Planenaufbau eines Nutzfahrzeugs (N), insbesondere Lastkraftwagen, Anhänger oder Sattelauflieger, mit wenigstens einem sich längs einer Seitenwand (4) erstreckenden Längsholm (15), einer entlang des Längsholms (15) von einer die zugehörige Seitenwand (4) verschließenden geschlossenen Stellung in eine die zugehörige Seitenwand (4) zum Be- und/oder Entladen freigebende geöffnete Stellung verschiebbar vorgesehenen Seitenplane (5) und mit einer Bodenstruktur (9) zum Aufstellen von mit dem Planenaufbau (1) zu transportierender Ladung, wobei die Seitenplane (5) eine Mehrzahl von sich in der geschlossenen Stellung wenigstens überwiegend vertikal erstreckenden Planken (13) zur Aussteifung der Seitenwand (4) und wenigstens ein mit wenigstens einer Planke (13) verbundenes Querverriegelungsmittel (18,19) aufweist,
**dadurch gekennzeichnet, dass** die Seitenplane (5) wenigstens ein mit wenigstens einer Planke (13) verbundenes Querverriegelungsmittel (18,19) aufweist und dass das wenigstens eine Querverriegelungsmittel (18,19) in der geschlossenen Stellung der Seitenplane (5) von einer sich formschlüssig an dem Längsholm (15) und/oder der Bodenstruktur (9) in der Richtung seitlich nach außen bezogen auf die Seitenwand (4) abstützenden Verriegelungsstellung in eine sich nicht formschlüssig an dem Längsholm (15) und/oder der Bodenstruktur (9) in der Richtung seitlich nach außen bezogen auf die Seitenwand (4) abstützende Freigabestellung und zurück verstellbar ausgebildet ist.

2. Planenaufbau nach Anspruch 1,
**dadurch gekennzeichnet, dass** das wenigstens eine Querverriegelungsmittel (18,19) derart mit der wenigstens einen Planke (13) verbunden ist, dass die wenigstens eine Planke (13) bei geschlossener Seitenplane (5) und in der Verriegelungsstellung des Querverriegelungsmittels (18,19) wenigstens abschnittsweise weiter innen bezogen auf die Seitenwand (4) angeordnet ist als in der Freigabestellung des Querverriegelungsmittels (18,19) bei geschlossener Seitenplane (5).

3. Planenaufbau nach Anspruch 2,
**dadurch gekennzeichnet, dass** das wenigstens eine Querverriegelungsmittel (18,19) derart mit der wenigstens einen Planke (13) verbunden ist, dass die wenigstens eine Planke (13) in der Verriegelungsstellung des Querverriegelungsmittels (18,19) insgesamt weiter innen bezogen auf die Seitenwand (4) angeordnet ist als in der Freigabestellung des Querverriegelungsmittels (18,19).

4. Planenaufbau nach Anspruch 2 oder 3,
**dadurch gekennzeichnet, dass** die wenigstens eine Planke (13) in der Verriegelungsstellung des wenigstens einen Querverriegelungsmittels (18,19) bei geschlossener Seitenplane (5) wenigstens abschnittsweise, insbesondere insgesamt, um wenigstens 10 mm, vorzugsweise um wenigstens 20 mm, insbesondere um wenigstens 30 mm, weiter innen bezogen auf die Seitenwand (4) angeordnet ist als in der Freigabestellung des wenigstens einen Querverriegelungsmittels (18,19) bei geschlossener Seitenplane (5).

5. Planenaufbau nach einem der Ansprüche 1 bis 4,
**dadurch gekennzeichnet, dass** sich das wenigstens eine Querverriegelungsmittel (18,19) in der Verriegelungsstellung formschlüssig an einer an den Laderaum (14) grenzenden Innenseite des Längsholms (15) abstützt und/oder dass sich das wenigstens eine Querverriegelungsmittel (18,19) in der Verriegelungsstellung formschlüssig an einer Palettenanschlagleiste (29) der Bodenstruktur (9) abstützt.

6. Planenaufbau nach einem der Ansprüche 1 bis 5,
**dadurch gekennzeichnet, dass** an der wenigstens einen Seitenwand (4) eine Mehrzahl von Rungen, insbesondere Eckrungen (10) und Mittelrungen (11), vorgesehen ist und dass, vorzugsweise, in der geschlossenen Stellung der Seitenplane (5) jeweils zwischen zwei Rungen wenigstens eine Planke (13) und wenigstens ein Querverriegelungsmittel (18,19) vorgesehen ist.

7. Planenaufbau nach einem der Ansprüche 1 bis 6,
**dadurch gekennzeichnet, dass** das wenigstens eine Querverriegelungsmittel (18,19) zwischen zwei Planken (13) vorgesehen und mit den beiden Planken (13) verbunden ist und, vorzugsweise, dass jeweils zwei Planken (13) mit einem Querverriegelungsmittel (18,19) verbunden sind.

8. Planenaufbau nach einem der Ansprüche 1 bis 6,
**dadurch gekennzeichnet, dass** mit wenigstens im Wesentlichen jeder Planke (13) je wenigstens ein Querverriegelungsmittel (18,19) verbunden ist.

9. Planenaufbau nach einem der Ansprüche 1 bis 8,
**dadurch gekennzeichnet, dass** das wenigstens eine Querverriegelungsmittel (18,19) zum Verstellen von der Verriegelungsstellung in die Freigabestellung und zurück schwenkbar und/oder verschiebbar vorgesehen ist und dass, vorzugsweise, das wenigstens eine Querverriegelungsmittel (18,19) als ein an wenigstens einer Planke (13) vorgesehener gegenüber der Planke (13) zwischen der Verriegelungsstellung und der Freigabestellung aus- und einfahrbarer Schiebling ausgebildet ist.

10. Planenaufbau nach Anspruch 9,
**dadurch gekennzeichnet, dass** der wenigstens eine Schiebling in der Verriegelungsstellung und/oder der Freigabestellung in Längsrichtung der zugehörigen Planke (13) formschlüssig an der zugehörigen Planke (13) festgelegt ist und dass, vorzugsweise, der wenigstens eine Schiebling zwischen einer Verschiebestellung zum Aus- und Einfahren gegenüber dem Schiebling und einer Arretierstellung zum Beibehalten der aus- und eingefahrenen Stellung verstellt, insbesondere geschwenkt, werden kann

11. Planenaufbau nach Anspruch 9 oder 10,
**dadurch gekennzeichnet, dass** der wenigstens eine Schiebling wenigstens einen gegenüber einem Teleskopabschnitt (23) zum Aus- und Einfahren des Schieblings gegenüber der Planke (13) schwenkbaren Schwenkabschnitt (22) zum Verstellen des Schieblings zwischen der Arretierstellung und der Verschiebestellung ausweist und dass, vorzugsweise, der Teleskopabschnitt (23) des wenigstens einen Schieblings zum formschlüssigen Abstützen des Querverriegelungsmittels (18,19) an dem Längsholm (15) und/oder der Bodenstruktur (9) in der Richtung seitlich nach außen bezogen auf die Seitenwand (4) ausgebildet ist.

12. Planenaufbau nach Anspruch 11,
**dadurch gekennzeichnet, dass** der wenigstens eine Schwenkabschnitt (22) des wenigstens einen Schieblings einen Griffabschnitt zum manuellen Verstellen des Schieblings zwischen der Arretierstellung und der Verschiebestellung ausweist.

13. Planenaufbau nach einem der Ansprüche 1 bis 12,
**dadurch gekennzeichnet, dass** der wenigstens einen Planke (13) zugeordnet ein Planenroller (16) längsverschiebbar am Längsholm (15) vorgesehen ist und dass, vorzugsweise, die wenigstens eine Planke (13) flexibel, insbesondere über die Seitenplane (5) und/oder einen Gurt, mit dem Planenroller (16) verbunden ist.

14. Planenaufbau nach einem der Ansprüche 1 bis 13,
**dadurch gekennzeichnet, dass** der wenigstens einen Planke (13) zugeordnet eine Spanneinrichtung (8) zum formschlüssigen Angreifen an der Bodenstruktur (9) und zum Strammziehen der Seitenplane (5) in im Wesentlichen vertikaler Richtung gegenüber der Bodenstruktur (9) vorgesehen ist und dass, vorzugsweise, die wenigstens eine Planke (13) flexibel, insbesondere über die Seitenplane (5) und/oder einen Gurt, mit der Spanneinrichtung (8) verbunden ist.

15. Nutzfahrzeug (N), insbesondere Lastkraftwagen, Anhänger oder Sattelauflieger, mit einem Planenaufbau 1 nach einem der Ansprüche 1 bis 14.

## Claims

1. Tarpaulin structure of a utility vehicle (N), in particular a truck, trailer or semi-trailer, with at least one longitudinal spar (15) extending along a side wall (4), a side tarpaulin (5) provided to be displaceable along the longitudinal spar (15) from a closed position closing the associated side wall (4) into an open position opening the associated side wall (4) for loading and/or unloading, and with a floor structure (9) for setting up cargo to be transported with the tarpaulin body (1), wherein the side tarpaulin (5) has a plurality of planks (13) extending at least predominantly vertically in the closed position for stiffening the side wall (4) and at least one cross-locking means (18, 19) connected to at least one plank (13),
**characterized in that**
the side panel (5) has at least one transverse locking means (18, 19) connected to at least one plank (13) and that the at least one transverse locking means (18,19) in the closed position of the side tarpaulin (5) is configured to be adjustable from a locking position supported positively on the longitudinal spar (15) and/or the floor structure (9) in the laterally outward direction relative to the side wall (4) into a release position not supported positively on the longitudinal spar (15) and/or the floor structure (9) in the laterally outward direction relative to the side wall (4) and back.

2. Tarpaulin structure according to claim 1,
**characterized in that**
the at least one cross-locking means (18, 19) is connected to the at least one plank (13) in such a way that the at least one plank (13) is arranged at least in sections further inwards in relation to the side wall (4) when the side tarpaulin (5) is closed and in the locking position of the cross-locking means (18, 19) than in the release position of the cross-locking means (18, 19) when the side tarpaulin (5) is closed.

3. Tarpaulin structure according to claim 2,
**characterized in that**
the at least one cross-locking means (18, 19) is connected to the at least one plank (13) in such a way that the at least one plank (13) in the locking position of the cross-locking means (18, 19) is arranged further inwards overall in relation to the side wall (4) than in the release position of the cross-locking means (18, 19).

4. Tarpaulin structure according to claim 2 or 3,
**characterized in that,**
in the locking position of the at least one transverse locking means (18, 19) when the side panel (5) is closed, the at least one plank (13) is arranged at least in sections, in particular overall, by at least 10 mm, preferably by at least 20 mm, in particular by at least 30 mm, further inwardly relative to the side wall (4) than in the release position of the at least one transverse locking means (18, 19) when the side panel (5) is closed.

5. Tarpaulin structure according to any one of claims 1 to 4,
**characterized in that,**
in the locking position, the at least one cross-locking means (18, 19) is supported in a form-fitting manner on an inner side of the longitudinal spar (15) adjoining the loading space (14) and/or that, in the locking position, the at least one transverse locking means (18, 19) is supported in a form-fitting manner on a pallet stop strip (29) of the floor structure (9).

6. Tarpaulin structure according to any one of claims 1 to 5,
**characterized in that**
a plurality of stanchions, in particular corner stanchions (10) and central stanchions (11), is provided on the at least one side wall (4) and **in that**, preferably, at least one plank (13) and at least one cross-locking means (18, 19) is provided respectively between two stanchions in the closed position of the side tarpaulin (5).

7. Tarpaulin structure according to any one of claims 1 to 6,
**characterized in that**
the at least one cross-locking means (18, 19) is provided between two planks (13) and is connected to the two planks (13) and, preferably, that respectively two planks (13) are connected to a cross-locking means (18, 19).

8. Tarpaulin structure according to any one of claims 1 to 6,
**characterized in that**
at least one cross-locking means (18, 19) is connected to at least substantially each plank (13).

9. Tarpaulin structure according to any one of claims 1 to 8,
**characterized in that**
the at least one cross-locking means (18, 19) is provided pivotably and/or displaceably for displacement from the locking position into the release position and back, and that, preferably, the at least one cross-locking means (18, 19) is configured as a sliding member which is provided on at least one plank (13) and can be extended and retracted relative to the plank (13) between the locking position and the release position.

10. Tarpaulin structure according to claim 9,
**characterized in that,**
in the locking position and/or the release position, the at least one sliding member is positively fixed to the associated plank (13) in the longitudinal direction of the associated plank (13) and that, preferably, the at least one sliding member can be adjusted, in particular pivoted, between a displacement position for extending and retracting relative to the sliding member and a arrest position for maintaining the extended and retracted position

11. Tarpaulin structure according to claim 9 or 10,
**characterized in that**
the at least one sliding member has at least one swivel section (22) which is pivotable relative to a telescopic section (23) for extending and retracting the sliding member relative to the plank (13) for adjusting the sliding member between the locking position and the sliding position, and that, preferably, the telescopic section (23) of the at least one sliding ring is configured for positively supporting the transverse locking means (18, 19) on the longitudinal spar (15) and/or the floor structure (9) in the laterally outward direction relative to the side wall (4).

12. Tarpaulin structure according to claim 11,
**characterized in that**
the at least one swivel section (22) of the at least one sliding blade has a handle section for manual adjustment of the sliding blade between the arrest sposition and the sliding position.

13. A tarpaulin structure according to any one of claims 1 to 12,
**characterized in that**
a tarpaulin roller (16) is provided associated with the at least one plank (13) to be longitudinally displaceable on the longitudinal member (15) and that, preferably, the at least one plank (13) is connected flexibly, in particular via the side tarpaulin (5) and/or a belt, to the tarpaulin roller (16).

14. A tarpaulin structure according to any one of claims 1 to 13,
**characterized in that**
a tensioning device (8) is provided in association with the at least one plank (13) for positive engagement with the floor structure (9) and for pulling the side tarpaulin (5) taut in a substantially vertical direction relative to the floor structure (9) and that, preferably, the at least one plank (13) is connected flexibly, in particular via the side tarpaulin (5) and/or a belt, to the tensioning device (8).

15. Commercial vehicle (N), in particular a truck, trailer or semi-trailer, with a tarpaulin body 1 according to one of claims 1 to 14.

## Revendications

1. Structure de bâche d'un véhicule utilitaire (N), en particulier d'un camion, d'une remorque ou d'une semi-remorque, avec au moins un longeron longitudinal (15) s'étendant le long d'une paroi latérale (4), une bâche latérale (5) configuré pour être déplaçable le long du longeron longitudinal (15) d'une position fermée fermant la paroi latérale (4) correspondante à une position ouverte ouvrant la paroi latérale (4) correspondante pour du chargement et/ou du déchargement, et avec une structure de fond (9) pour poser un chargement à transporter avec la structure de bâche (1), où la bâche latérale (5) a une pluralité de planches (13) s'étendant au moins majoritairement verticalement en position fermée pour raidir la paroi latérale (4) et au moins un moyen de verrouillage transversal (18, 19) relié à au moins une planche (13),
**caractérisé en ce que**
la bâche latérale (5) a au moins un moyen de verrouillage transversal (18, 19) relié à au moins une planche (13) et que le au moins un moyen de verrouillage transversal (18,19) est configuré de manière déplaçable, dans la position fermée de la bâche latérale (5), d'une position de verrouillage s'appuyant par complémentarité de forme sur le longeron longitudinal (15) et/ou la structure de fond (9) dans la direction latérale vers l'extérieur par rapport à la paroi latérale (4), à une position de libération s'appuyant sans complémentarité de forme sur le longeron longitudinal (15) et/ou la structure de fond (9) dans la direction latérale vers l'extérieur par rapport à la paroi latérale (4), et inversement.

2. Structure de bâche selon la revendication 1,
**caractérisé en ce que**
le au moins un moyen de verrouillage transversal (18, 19) est relié à la au moins une planche (13) de telle sorte que la au moins une planche (13) est disposée, lorsque la bâche latérale (5) est fermée et dans la position de verrouillage du moyen de verrouillage transversal (18, 19), au moins par sections plus à l'intérieur par rapport à la paroi latérale (4) que dans la position de libération du moyen de verrouillage transversal (18, 19) lorsque la bâche latérale (5) est fermée.

3. Structure de bâche selon la revendication 2,
**caractérisé en ce que**
le au moins un moyen de verrouillage transversal (18, 19) est relié à la au moins une planche (13) de telle sorte que la au moins une planche (13) est disposée entièrement plus à l'intérieur par rapport à la paroi latérale (4) dans la position de verrouillage du moyen de verrouillage transversal (18, 19) que dans la position de libération du moyen de verrouillage transversal (18, 19).

4. Structure de bâche selon la revendication 2 ou 3,
**caractérisé en ce que l'**
au moins une planche (13) est disposée, dans la position de verrouillage de l'au moins un moyen de verrouillage transversal (18, 19) lorsque la bâche latérale (5) est fermée, au moins par sections, en particulier entièrement, d'au moins 10 mm, de préférence d'au moins 20 mm, en particulier d'au moins 30 mm, plus à l'intérieur par rapport à la paroi latérale (4) que dans la position de libération de l'au moins un moyen de verrouillage transversal (18, 19) lorsque la bâche latérale (5) est fermée.

5. Structure de bâche selon l'une des revendications 1 à 4,
**caractérisé en ce que le**
au moins un moyen de verrouillage transversal (18, 19) s'appuie, dans la position de verrouillage, par complémentarité de forme sur un côté intérieur du longeron longitudinal (15) adjacent à l'espace de chargement (14) et/ou que le au moins un moyen de verrouillage transversal (18, 19) s'appuie, dans la position de verrouillage, par complémentarité de forme sur une baguette de butée de palette (29) de la structure de plancher (9).

6. Structure de bâche selon l'une des revendications 1 à 5,
**caractérisé en ce qu'**
une pluralité de ranchers, en particulier des ranchers d'angle (10) et des ranchers centraux (11), est prévue sur la au moins une paroi latérale (4) et que, de préférence, dans la position fermée de la bâche latérale (5), au moins une planche (13) et au moins un moyen de verrouillage transversal (18, 19) sont prévus respectivement entre deux ranchers.

7. Structure de bâche selon l'une des revendications 1 à 6,
**caractérisé en ce que**
ledit au moins un moyen de verrouillage transversal (18, 19) est prévu entre deux planches (13) et est relié aux deux planches (13) et, de préférence, deux planches (13) à la fois sont reliées avec un moyen de verrouillage transversal (18, 19).

8. Structure de bâche selon l'une des revendications 1 à 6,
**caractérisé en ce que**
au moins un moyen de verrouillage transversal (18, 19) est relié à au moins essentiellement chaque planche (13).

9. Structure de bâche selon l'une des revendications 1 à 8,
**caractérisé en ce que**
le au moins un moyen de verrouillage transversal (18, 19) est prévu pour pouvoir pivoter et/ou coulisser pour passer de la position de verrouillage à la position de libération et inversement, et que, de préférence, le au moins un moyen de verrouillage transversal (18, 19) est formé sous forme d'une bague coulissante prévue sur au moins une planche (13) et étant déployable et rétractable par rapport à la planche (13) entre la position de verrouillage et la position de libération.

10. Structure de bâche selon la revendication 9,
**caractérisé en ce que**
dans la position de verrouillage et/ou la position de libération, l'au moins une bague coulissante est fixée par complémentarité de forme à la planche associée (13) dans la direction longitudinale de la planche associée (13) et que, de préférence, l'au moins une bague coulissante être déplaçable, en particulier pivotée, entre une position de déplacement pour une extension et une rétraction par rapport à la bague coulissante et une position d'arrêt pour le maintien de la position étendue et rétractée.

11. Structure de bâche selon la revendication 9 ou 10,
**caractérisé en ce que**
l'au moins une bague coulissante a au moins une section pivotante (22) pivotable par rapport à une section télescopique (23) pour une extension et une rétraction de la bague coulissante par rapport à la planche (13) pour le réglage de la bague coulissante entre la position d'arrêt et la position de coulissement et que, de préférence, la section télescopique (23) de l'au moins une bague coulissante est configuré pour soutenir par complémentarité de forme le moyen de verrouillage transversal (18, 19) sur le longeron longitudinal (15) et/ou la structure de fond (9) dans la direction latérale vers l'extérieur par rapport à la paroi latérale (4).

12. Structure de bâche selon la revendication 11,
**caractérisé en ce que**
ladite au moins une partie pivotante (22) de ladite au moins une bague coulissante comprend une partie de préhension pour déplacer manuellement la bague coulissante entre la position d'arrêt et la position de coulissement.

13. Structure de bâche selon l'une des revendications 1 à 12,
**caractérisé en ce qu'**
un rouleau de bâche (16) est prévu sur le longeron longitudinal (15) de manière déplaçable longitudinalement et associé à la au moins une planche (13) et que, de préférence, la au moins une planche (13) est reliée de manière flexible au rouleau de bâche (16), en particulier par la bâche latérale (5) et/ou une sangle.

14. Structure de bâche selon l'une des revendications 1 à 13,
**caractérisé en ce qu**
associé à la au moins une planche (13), un dispositif de serrage (8) pour un engagement par complémentarité de forme avec la structure de fond (9) et pour un serrage de la bâche latérale (5) dans une direction essentiellement verticale par rapport à la structure de fond (9) est prévu et que, de préférence, la au moins une planche (13) est reliée de manière flexible, en particulier par l'intermédiaire de la bâche latérale (5) et/ou d'une sangle, au dispositif de serrage (8).

15. Véhicule utilitaire (N), en particulier camion, remorque ou semi-remorque, comportant une structure bâchée 1 selon l'une des revendications 1 à 14.
